# EUROPEAN PATENT APPLICATION

(11) **EP 2 405 410 A1**
(43) Date of publication of application: **11.01.2012**
(21) Application number: 11165016.4
(22) Date of filing: 21.12.2006
(51) Int. Cl.: G07F 17/32

(54) **Improvements relating to on-line gaming**

(30) Priority: 22.12.2005 US 753181 P; 23.01.2006 US 761185 P
(62) Divisional of application: 06820623.4
(71) Applicant: PKR Limited, St. Anne GY9 3TD (GB)
(72) Inventor: Longley, Jeremy, London, NW1 OEG (GB); San, Jeremy Elliot, London, NW1 7HY (GB)
(74) Representative: Brannen, Joseph Waclaw

(57) **Abstract**

A player terminal for use with a gaming server over a distributed communications network for facilitating the playing of a distributed multi-player on-line game involving interactions between different players in a virtual playing environment. The player terminal comprises receiving means and generating means. The receiving means is arranged to receive from the server, information specifying a virtual playing environment and on-line players in that environment, and update information relating to game-playing events occurring within that environment during the playing of an on-line game. The generating means is arranged to generate a graphical representation of the virtual playing environment from the received information and graphical representations of each on-line game player. Furthermore, the generating means is arranged to enable the player to change the appearance of the graphical representation to reflect the experience of the player in playing the game.

## Description

The present invention concerns improvements relating to on-line gaming and to methods and systems for multiple players playing sports or games simultaneously in an on-line virtual environment. In particular, the present invention addresses the need for an interactive on-line gaming experience which is comparable to the playing of sports or games in real life.

### Background to the Invention

Multiple player on-line games are very crude. They provide the basic gameplay information but are very different from real gameplay. There are many subtle aspects of real gameplay which are simply lost in a virtual environment.

For example, when a multiplayer sport or game is played in a non-virtual environment, a player will often employ tactics which are intended to convey a false impression of the player's intention to his opponent or opponents. The player may achieve this by changing the way he or she plays the game or sport. For example, a chess player may change his tactics from attack to defence in an attempt to convince his opponent that the player has perceived a threat and consequently draw the opponent into attacking the player and possibly weakening their position. In another example, a boxer may appear that he is defending by moving backwards but then suddenly move forwards and throw an attacking combination of punches as his opponent moves forward. Similarly in poker, a player may make a series of large raises in an attempt to bluff his opponents into thinking that his has a strong hand. Such gameplay tactics are easily and regularly employed when games and sports are played both in a real and on-line virtual environment.

However, it is not possible to employ subtle psychological tactics in a virtual environment. For example, when a footballer takes a penalty in real life he may position his body in such a way that he convinces the goalkeeper that he is going to shoot in one direction, when in fact he shoots in the other direction. The footballer may also employ other subtler tactics such as looking at a certain place in the goal to mislead the goalkeeper into diving the wrong way. Such subtle tactics are lost in a virtual gaming environment.

Conversely, the footballer may unwittingly give away his intentions by glancing in the direction that his is going to shoot, for example. This kind of inadvertent revealing of the intentions of a player during gameplay is particularly important when playing games involving a sophisticated psychological element such as poker. Such clues to the state of mind and intentions of a poker player for example are known as 'tells' and are an intrinsic part of playing poker.

There are currently many on-line poker systems such as those provided by True Poker, Pacific Poker and Party Poker. Whilst many gameplay attributes have been provided, there is no appreciation or attempt to provide such subtle psychological tactics.

The online gaming software of the prior art provides only the most basic methods for players to express themselves. Such methods are often limited to the choice of a username, a selection from one of a fixed range of two-dimensional images, or occasionally the ability for a player to upload a small image which other players can see. This can represent a problem in the playing of multiplayer on-line games such as poker where the behaviour of a player has an influence on their opponent's interaction with the game. This problem is most acute when the on-line game is occurring in a virtual location where each player is represented by a character, because the character is typically a very basic representation of the player, and his or her actions.

Furthermore, existing on-line poker products provide two basic methods for players to interact during a game of poker. Firstly, gameplay interactions where the player acts in turn to complete a hand of poker (Fold, Call, Raise, etc.); and secondly, player interactions such as communication between players via text. As mentioned above, the prior art implementations and the visual representation of these interactions are very basic. In the former case, the player is simply provided with a selection of buttons that are appropriate and invited to click one of them. In the latter case, the player is provided with a common chat box, where they can type text which is seen by all players at that table.

Existing systems are perhaps limited by the need to provide a real-time multiple player experience. The way in which such prior art systems operate over a wide area network can act as a constraint to the functionality provided.

In summary, existing on-line sports or games present the player with a very minimalist view of the gameplay experience. In particular, in poker, the table is presented in a small two-dimensional window, with simple graphical sprites used to represent players, cards, the table and the surrounding environment. There is very little sense of realism, immersion or the feeling of "being there". Rather, the player feels that they are playing an out of date video game.

The inventors of the present invention have appreciated that the ability to utilise the physiological tactics described above, as well as the ability to read tells, has been absent from real-time virtual games and sports. With this understanding and utilising improved communication protocols the present invention accordingly seeks to provide an improved on-line gaming experience by addressing at least some of the above described problems.

### Brief Summary of the Invention

According to a first aspect of the present invention there is provided a gaming server arranged to communicate with a plurality of on-line player's terminals for facilitating the playing of a distributed multi-player on-line game involving interactions between a plurality of different players in a virtual environment, the server comprising: a playing module arranged to control the playing of the game with each of the different on-line players, the playing module being arranged to generate a series of gaming events, each gaming event being directed to one or more on-line players participating in the game; receiving means arranged to receive information from a remote player terminal concerning a selected virtual game playing environment and a selected graphical representation of the on-line game player within the environment; a game state module arranged to construct a specification of the graphical game-playing environment and representations of the players within the environment from the received information, together with a current state of the game; and transmitting means arranged to transmit the specification to a plurality of remote on-line players' communication terminals; the transmitting means being arranged, during the playing of an on-line game, to broadcast in real-time game-playing commands received from a player's terminal to other players' terminals participating in the same game and to update the game state module; the game-playing commands including information relating to the actions of the on-line player which are reflected in the behaviour of the graphical representation of that on-line player.

The present invention addresses the problems mentioned above. In particular, it resides in the appreciation that commands made by players on their terminals are reflected in the behaviour of the graphical representations of the players. When the present invention is used, game playing commands made by a player into their computer are translated into behavioural actions of their graphical representation which can be observed by the other players in real-time in the virtual environment, thereby enhancing the playing of the game.

Preferably the transmitting means of the gaming server is arranged to transmit playing commands for creating animation of the player representations. The transmitting means may be arranged to transmit active game playing commands generated in response to a gaming event and may be arranged to transmit passive game playing commands generated in response to a player viewing hidden information provided in the gaming environment.

The on-line game may be poker and the passive game playing commands may include a player looking at his cards, counting out his chips, looking at a game play history, and counting another player's chips. Preferably the transmitting means is arranged to transmit emotional information relating to the player's emotional state of mind.

The emotional information of the gaming server may comprise information controlling the posture of the player representation. The transmitting means may be arranged to transmit information relating to the emotional parameters of happiness and/or aggressiveness and may be arranged to transmit player-selected misleading information relating to the player.

The on-line game may be poker and the transmitting means may be arranged to transmit information showing at least some of the player's cards at the end of a game hand. The transmitting means may be arranged to transmit information showing all of the player's cards at the end of a game hand.

The ability to show at least some of the player's cards, for example, either or both of the hole cards when the player wins an uncontested pot, allows the player to boast about their hand. For example, they may wish to show his or her opponent that they were bluffing, or that they had a strong hand, with the purpose of intimidating the opponent. This is in contrast to the prior art systems which only allows players to show all or none of their hand.

As in real poker, the present invention allows the player influence opponent's physiological state. For example, by taking further advantage from an uncontested win without having to give away more information about their hand than is needed.

A gaming server according to any preceding claim, wherein the playing module is arranged to control a plurality of independent games of the same type, involving different players, occurring at the same time.

The playing module may be arranged to control a plurality of independent games of different type, involving different players, occurring at the same time.

The gaming sever may further comprise an index module arranged to collate and generate a summary of information relating to all of a plurality of games currently in progress. The index module may be arranged to identify a plurality of game characteristics regarding each game such that when the game characteristics are displayed on the player terminal, the player is able to decide which game is of interest. The index module may also be arranged to pass the summary to the transmission means for transmission to a player terminal. The index module may also be arranged to check the current status of the game from the playing module and if the playing module indicates there is a possibility for the requesting player to join the multi-person game, then to instruct the game state module to populate the selected game environment with the information relating to the graphical representation of the requesting player and to enable the requesting player to participate in the game. The index module may also be arranged to check the current status of the game from the playing module and if the playing module indicates there is currently no possibility for the requesting player to join the multi-person game, then to place a play request in a joining queue for that game at the playing module and instruct the transmission module to send a message indicating the same to the player terminal. The index module may be arranged to monitor the current status of the selected game from the playing module and if the opportunity arises for the requesting player to join the selected game, to instruct the playing module to populate the selected game environment with the graphical representation of the requesting player and to enable the requesting player to participate in the game. The index module may be arranged to enable the player selection of a plurality of specific games from the summary and to instruct the game state module to include that player terminal into a list of interested players of that game.

According to a second aspect of the present invention there is also provided a method of communicating with a plurality of on-line player terminals for facilitating the playing of a distributed multi-player on-line game involving interactions between a plurality of different players in a virtual environment, the method comprising: controlling the playing of the game with each of the different on-line players, by generating a series of gaming events, each gaming event being directed to one or more on-line players participating in the game; receiving information from a remote player terminal concerning a selected virtual game playing environment and a selected graphical representation of the on-line game player within the environment; constructing a specification of the graphical game-playing environment and representations of the players within the environment from the received information, together with a current state of the game; and transmitting the specification to a plurality of remote on-line players' communication terminals; the transmitting step comprising broadcasting in real-time, during the playing of an on-line game, game-playing commands received from a player's terminal to other players' terminals participating in the same game and updating the specification; the game-playing commands including information relating to the actions -of the on-line player which are reflected in the behaviour of the graphical representation of that on-line player.

According to a third aspect of the present invention there is provided a player terminal for use with a gaming server over a distributed communications network for facilitating the playing of a distributed multi-player on-line game involving interactions between different players in a virtual playing environment, the player terminal comprising: receiving means for receiving from the server, information specifying a virtual playing environment and on-line players in that environment, and update information relating to game-playing events occurring within that environment during the playing of an on-line game; generating means for generating a graphical representation of the virtual playing environment from the received information, graphical representations of each on-line game player and graphical representations of game-playing events occurring within the virtual environment; interaction means for interacting with the game playing events, the interaction means generating information relating to the actions of the on-line player during the playing of the on-line game, which are reflected in the behaviour of the graphical representation of that on-line player; and transmitting means for transmitting to the server, game-playing commands generated at the player terminal in response to the displayed game-playing events; such that other on-line players can ultimately see the actions of the on-line player.

Advantageously, when applied in a poker application a player's behaviour is advantageously reflected in their graphical representation by receiving information which relates to the player's interactions with the playing events. For example, in a game of poker, if the player wishes to find out how many chips a second player has, the player will use their mouse to direct the on-screen cursor to hover over the second player's chips. This will be represented to the other players by virtue of the player's graphical representation moving to look at the second player's chips. Such representations serve to provide a means for opposing players to attempt to ascertain the player's intentions or motivation. Other examples which embody this advantage are listed below.

The receiving means of the player terminal may be arranged to receive update information including commands generated at remote on-line players' communication terminals in response to the gaming events.

The generating means may be arranged to manipulate a player's graphical representation in response to interpreting the received update information. The generating means may be arranged to generate each graphical representation as a three-dimensional character representation. The generating means may be arranged to generate each graphical character representation as an avatar. The generating means may be arranged to generate each graphical representation as a representation which uniquely identifies an on-line player. The generating means may be arranged to enable the on-line player to configure his graphical representation.

The graphical representation of the player terminal may be a character and the generating means is arranged to enable each player to configure their graphical representation to reflect physical characteristics of the player, including one or more from the group comprising: age, sex, race, hair style, hair colour, facial hair style, voice, detail texture. The graphical representation may be a character and the generating means is arranged to enable each player to configure their graphical representation to reflect different wearable items, including: clothing, and/or accessories including jewellery, headgear, and glasses. The generating means may be arranged to enable the player to change the appearance of the graphical representation, by providing access to different ones of the wearable items with increased accrual of playing points by the player. The wearable items may be accessible to reflect the player's experience in playing the game. The generating means may be arranged to encode the appearance of the player's graphical representation, and provide this to the transmission means for transmission to the server.

The player terminal may further comprise a data store for storing a plurality of graphical images for use in generating the virtual playing environment, the graphical components for constructing representations of each on-line game player and the graphical representations of game-playing events.

Preferably, the data store is arranged to store the player-specified graphical representation.

The interaction means may be arranged to generate animation commands for animating the player representation, the generation means is arranged to display the animated player representation and the transmission means is arranged to transmit the animation commands to the server.

The player terminal may further comprise a plurality of different stored animations, each animation reflecting a different emotion or message for the other players of the game.

The interaction means may be arranged to enable the player to select an animation of the graphical representation, by providing access to different ones of the animations. The interaction means may be arranged to enable an animation to be directed to one specific on-line player of the game. The animation of the graphical representation may be selected to convey a misleading message to other players of the game. The different animations may reflect the player's experience in playing the game.

The interaction means may be arranged to provide access to different ones of the animations with increased accrual of playing points by the player.

The on-line game may be poker and the animations may be different chip tricks.

Preferably, the interaction means is arranged to generate emotional information relating to the player's emotional state of mind. The emotional information may comprise information controlling the posture of the player representation. The interaction means may be arranged to generate information relating to the emotional parameters of happiness and/or aggressiveness. The interaction means may comprise the player selecting an emotional state and the interaction means is arranged to automatically apply the selected emotional state to all player actions. The interaction means may comprise the player selecting an emotional state and the interaction means is arranged to apply the selected emotional state to a selected player action in response to a gaming event. The interaction means may be arranged to display a two-dimensional graph of different emotional states such that the player can graphically select the precise combination of emotional states for their graphical representation which best reflects their true emotional state.

The player terminal may further comprise monitoring means for monitoring the manner in which a player is participating in the game and the player's success and to reflect his likely emotions as a feedback position on the two-dimensional graph. The monitoring means may be arranged to move the player-selected position on the graph to the feedback position.

The interaction means may be arranged to generate active game playing commands in response to a gaming event. The interaction means also may be arranged to generate passive game playing commands generated in response to a player viewing hidden information provided in the gaming environment. The on-line game is preferably poker

### Brief Description of the Drawings

Presently preferred embodiments of the present invention will be described, by way example only, with reference to the following drawings, in which:-
Figure 1 is a schematic block diagram of a computer system for implementing a poker system according to a preferred embodiment of the present invention;
Figure 2 is a schematic block diagram of a software client of the computer system of Figure 1 installed on a personal computer;
Figure 3 is a schematic block diagram of a datastore which is incorporated in the software client of Figure 2;
Figure 4 is a schematic block diagram of a gaming server of the computer system of Figure 1;
Figure 5 is a schematic block diagram of a datastore which is incorporated in the gaming server of Figure 4;
Figure 6 is a schematic block diagram of part of the computer system of Figure 1 which illustrates message flows according to a preferred embodiment of the present invention;
Figure 7 is a screenshot of an initial GUI shown to players when they log on to the poker system of Figure 1;
Figure 8 is a screenshot of an options GUI generated by the system of Figure 1;
Figures 9a, 9b, 9c, 9d and 9e are screenshots illustrating the process of changing features using the options GUI of Figure 8;
Figure 10a is a screenshot of a view of a poker table displayed to a non-participating player which has been generated by the system of Figure 1;
Figure 10b is a screenshot of a view of the poker table of Figure 10a displayed to a participating player;
Figure 10c is a graphical screen image showing a close-up view of a hand history tab generated by the system of Figure 1;
Figure 11a is a graphical screen image showing a close-up view of a mood manager generated by the system of Figure 1;
Figure 11b is a graphical screen image showing an alternative mood manager according to an alternative embodiment of the present invention;
Figure 12a is a table showing a set of gameplay responses which depend on the setting of the mood manager shown in Figure 11a or 11b;
Figures 12b to 12d are screenshots illustrating the different responses of an avatar depending on the setting of the mood manager of Figure 11a or 11b;
Figures 13a to 13c are further screenshots illustrating the different responses of a further avatar depending on the setting of the mood manager of Figure 11a or 11b;
Figure 14a is a graphical screen image showing a close-up view of part of a HUD for selecting avatar actions according to another embodiment of the present invention;
Figures 14b to 14e are graphical screenshots showing an avatar performing emotes generated by the system of Figure 1;
Figures 14f and 14g are graphical screenshots showing the execution of a "chip trick" by an avatar generated by the system of Figure 1;
Figures 15a to 15c are graphical screenshots showing various selectable camera views of the gaming environment generated by the software client of Figure 2;
Figures 16a to 16c are graphical screenshots showing a dynamic camera view of a gaming table generated by the software client of Figure 2;
Figures 17a to 17c are graphical screenshots showing a method of playing more than one game of poker simultaneously using the system of Figure 1;
Figures 18a to 18c are graphical screenshots showing a method of a player showing one or both hole cards using the system of Figure 1; and
Figures 19a and 19b are graphical screenshots showing a method of updating the virtual environment generated by the system of Figure 1.

### Detailed Description of the Embodiments of the Present Invention

The embodiments of the present invention are applicable to all on-line games or sports which are played by multiple players simultaneously in a virtual environment. However, preferred embodiments of the present invention are described herein with reference to a system for playing virtual on-line poker. As such, standard poker terms are used throughout this detailed description, the meanings of which will be familiar to the skilled person.

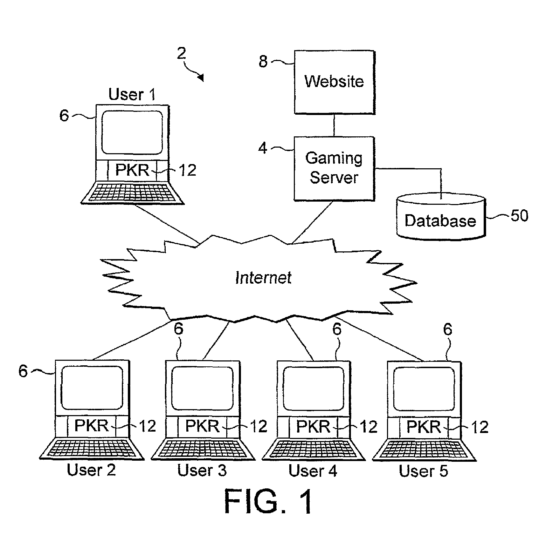

Figure 1 shows a computer system 2 according to a preferred embodiment of the invention. Five players, Users 1, 2, 3, 4 and 5, each use a personal computer 6 which is connected to a gaming server 4 via the internet. The gaming server 4 is linked to a website 8 on which the players are logged via their respective personal computers 6. A gaming database 50 is incorporated at the gaming server 4. The computer system 2 is arranged to host an on-line poker system in which Users 1 to 5 can play poker against one another for real or fake money.

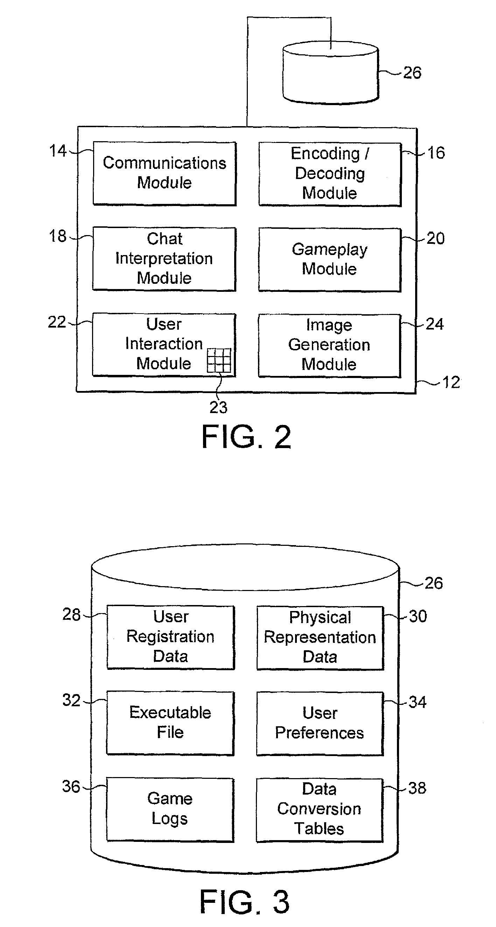

In order to play poker on the computer system 2, each player uses their personal computer 6 to connect to the website 8 which instructs them to download and install a software client (PKR) 12 onto their personal computer 6. The software client 12 enables each player to connect and play poker on the system 2 and is discussed in more detail below with reference to Figures 2 and 3. In order to describe the software client 12, reference is made to a single player, User 1. However, the features of all the players' software clients 12 are identical; therefore, the following description of User 1's software client 12 applies equally to the software clients 12 and personal computers 6 of Users 2 to 5.

The software client 12 comprises several software modules, shown in Figure 2, which are described in turn. An image generation module 24 generates, on User 1's personal computer 6, a virtual poker environment and three-dimensional virtual representations, known to the skilled person as "avatars", of each player playing in a game of poker from data stored in the software client 12. The image generation module 24 also interacts with gameplay data received by a communications module 14 which facilitates communication between the software client 12 and the gaming server 4 via the Internet, using the functionality of an internet browser (not shown), for example. An encoding/decoding module 16 interprets received coded messages from the gaming server 4 and also encodes messages sent from the software client 12 to the gaming server 4. A chat interpretation module 18 is used for text-based communication betweens User 1 and the other players playing in the same game of poker. A user interaction module 22 notes the User 1's interactions with the software client 12 and communicates with the image generation module 24 to represent that interaction on the User 1's avatar. The user interaction module 22 includes several feature specific modules 23 for handling features of the game such as emote generation, chip tricks, chip counting, and emotional representation at each event dependent on a chosen emotional profile. These features are discussed later in this document. A gameplay module 20 controls the gameplay logic of the game, for example, the rules of poker.

Also incorporated in the software client 12 is a client database 26 which is described with reference to Figure 3. The client database 26 is a data store acting as a repository for data used by the software client 12. The client database 26 stores the following data: user registration data 28 which includes the player's account details; physical representation data 30 in the form of a graphical image library which contains all the required graphical components for the image generation module 24 to generate the avatars and the virtual poker environment; an executable file 32 for launching the software client 12 to enable the player to play poker on the system 2; user preferences 34 which define how the software client 12 presents the game to the player; game logs 36 which record gameplay events in any game in which the player has been active or has been watching; and data conversion tables 38 which contain data for use by the encoding/decoding module 16.

Once downloaded and installed, the software client 12 is executed to connect to the gaming server 4 via the Internet and each player creates a user account stored in the gaming database 50 which is also arranged to store game playing information.

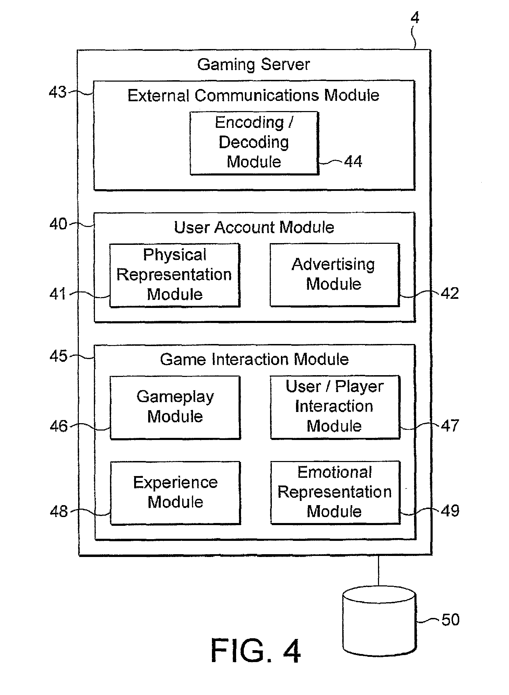

Taking the game of poker which is played by Users 1 to 5 on the computer system 2 as an example, the logic of the game is executed in a gameplay module 46 on the gaming server 4. The gaming server 4 communicates the state of the game to each player's software client 12 (e.g. what cards each player is dealt, and how much they have bet so far), requests interaction from each player (e.g. "it's your turn, do you want to bet, check or fold?"), and carries out the game logic in accordance with each player's response. The gaming server 4 also acts as a relay point, to communicate player actions (e.g. chip tricks) and emotional states ― which is described in more detail below ― to each of the other players. Specifically, when the player performs an action or changes the state of the game at his or her respective software client 12, this is communicated to the gaming server 4 which in turn broadcasts the change of state to the other players playing the game. Referring to Figure 4, the gaming server 4 hosts the games of poker played on the system 2 and comprises a user account module 40 in which there is a physical representation module 41 which stores and supplies updates to the physical representation data 30 stored in the client database 26, and handles the purchasing of additional items (described in detail below). The user account module 40 also comprises an advertising module 42 which analyses each player's profile stored in a gaming database 50 against a set of potential adverts, and communicates selected advertising data matched to the player's profile to the client software 12 (described in further detail below). The gaming server also contains status information relating to games hosted by the gaming server 4 which enables the player to determine which game the wish to join.

The gaming server 4 also comprises a game interaction module 45 which comprises the gameplay module 46 which generates a series of gaming events and controls the state of each game of poker hosted by the gaming server 4. Each game of poker has an associated virtual playing environment, and information regarding all the required graphical components of each virtual environment and each game is processed at the gameplay module 46. For example, the game interaction module 45 controls the sequence of gameplay according to the rules of poker, communicates the state of the game to each software client 12, requests interaction from each player as necessary, and updates the game state as a result of the player's responses to these requests and determines the winner of a game and allocates any winning funds to the corresponding user's account. An experience module 48, in conjunction with an external communications module 43, relays each player's experience to each of the other player's software clients 12. A user/player interaction module 47 handles communication between players that is not related directly to the flow of the game, for example, chat between players, the performing of chip tricks, and the expression of an emote (e.g. laugh, cry, etc.). Finally, the game interaction module also comprises an emotional representation module 49 which provides a mechanism for the communication of each player's overall emotional state to the other players in the same game.

The gaming server 4 also includes the external communications module 43 for handling all of the communications to and from the server 4. The external communications module 43 comprises an encoding/decoding module 44 for interpreting received coded messages and encoding outgoing messages.

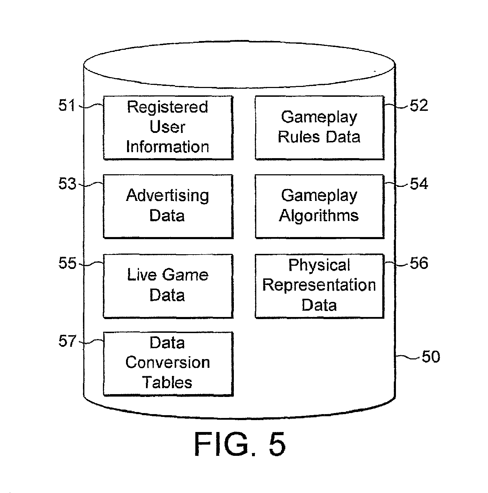

A gaming database 50 is incorporated into the gaming server 4 which is shown schematically in Figure 5. The gaming database 50 provides a data store for storing information including registered user information 51, for example, account details including the name, username, email, address, amount of real and fake money and number of PKR points (described below) for each player; gameplay rules data 52 and gameplay algorithms 54 enable different games of poker to be played in accordance with any associated house rules; advertising data 53 which is used for updating each player's virtual environment; data conversion tables 57 which contain data for use by the encoding/decoding module 44; live game data 55 which contain logs for played games and games in progress; and physical representation data 56 which contains image data for each of the games.

Coded messages are transmitted within the computer system 2 to ensure that the representations of a game displayed on each player's software client 12 are synchronised. As mentioned above, each player has an avatar which represents them in a game of poker played on the computer system 2. Since each software client 12 contains a complete set of options for each avatar, the appearance of each avatar can be communicated to the other software clients very efficiently via a sequence of codes. This enables the gameplay to be detailed and operate in real-time.

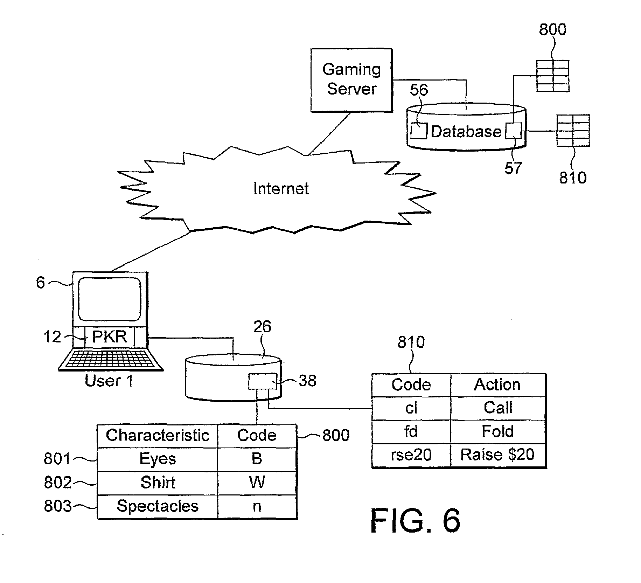

Referring now to Figure 6, an avatar characteristic table 800 is stored in the data cbnversion tables 38 of the client database 26. For simplicity and ease of understanding only three characteristics of an avatar have been listed, i.e. eye colour 801, shirt colour 802 and spectacles 803, the data for which is stored in the physical representation data 30. Each characteristic has an associated code which defines it appearance. In this case, "B" = blue eyes, "W" = white shirt and "n" = no spectacles. However, it is envisaged that each avatar will comprise many more characteristics which are encoded in any number of ways which will be immediately apparent to the skilled person. An identical avatar characteristic table 800 is stored on the gaming database 50 and on every other software client 12. For clarity only one player is shown in Figure 6; however, it will be immediately apparent that other players can log onto the gaming server 4 as described above to play poker on the system 2.

The gaming server 4 contains a representation of the state of each game hosted in the game interaction module 45 on the server 4. Also, a copy of each game is run on each software client 12 and updates relating to gaming events and behavioral events are sent by the gaming server 4.

Each time a new player wishes to view a game they can do so by simply receiving the character attribute codes for each player in the game and details for which environment the game is occurring in. The software client 12 of the new player then generates the game representation on the local screen. Actions within the game relating to gameplay events are simply a stream of update codes received from the gaming server 4 which are simply interpreted into the appropriate graphical representations or animations of the graphical representations.

The skilled person will recognise that each games has a "state", which includes the variables of the cards each player holds, how much money each player has bet, etc. The state remains on the server. "Actions" such as a player betting, or the cards being dealt represent a "change of state" - and these changes occur for a reason. For example, if User 1 bets $20 the state changes, i.e. User 1 has $20 less in their stack of chips and $20 is placed in front of their representation as a bet. The reason for the change in state is that "User 1 bet $20". The reason is used to enable the software client 12 to perform transitions between states. In this case, that means playing an animation of User 1's on-line representation moving the chips from one place to another. Also, this change of state is communicated both to the server 4 such that all the other participants (active players and observing players) can be updated with the change of state. As mentioned above, new players can join the game at any time ― they simply receive the complete current state of the game, and are ready to receive state transitions from this point forward.

Thus, when User 1 uses their software client 12 to logon to the gaming server 4 and views or joins a game, a permanent network connection is created between the personal computer 6 and the gaming server 4. The codes which define each avatar in the game that User 1 is viewing or joining are sent from the gaming server 4 via the external communications module 43 to the User 1's software client 12. The software client 12 uses the information stored in its data conversion tables 38 to look-up each code and assign the associated characteristic to each three-dimensional animated avatar.

Every event which takes place in a game of poker played on the computer system 2 has a corresponding action which is stored in an action table 810 in the software client 12, as shown in Figure 6. The action table 810 comprises a coded list of events, i.e. "cl" = call, "fd" = fold and "rse20" = raise $20. As stated above, the action table 810 comprises many actions (not all shown) which are encoded (in any number of ways which will be readily apparent to the skilled person).

If, for example, User 1 is playing in the game of poker and wishes to fold their cards, User 1 will instruct the software client 12 to do this. The software client 12 then sends a simple coded message which identifies the action and the player, such as "fd:1", where "1" is the code for User 1, to the gaming server 4. The gaming server 4 then broadcasts that message to the software client 12 of each of the other players playing or watching that game. Those software clients 12 interpret the code and instruct their representations of User 1 (User 1's avatar) to fold his or her cards.

Similarly, when User 1 triggers an emote or a chip trick, a code identifying the player and emote or chip trick is sent to the gaming server 4 which then broadcasts the code to each participating or watching software client 12 which interprets the code and performs the emote or chip trick on each software client's corresponding representation of User 1.

Each player's software client 12 also contains the necessary graphical data to generate the virtual playing environment of a game of poker hosted on the gaming server 4. The graphical data is stored in the physical representation data 30 which contains a plurality of virtual environments which are each defined by a unique code. Similarly to the method described above for the avatars in a game, when User 1 joins or watches a game, the gaming server 4 transmits the unique code for the virtual environment to the software client 12. The software client 12 then looks-up the relevant virtual environment in the physical representation data 30, which it then generates.

The interaction module 22 of the software client 12 also monitors the player's subtle interaction in the virtual environment. For example, if User 1 moves their mouse pointer so that it hovers over the representation of another player, i.e. another player's avatar, the interaction module 22 in conjunction with the communications module 14 sends a coded message to the gaming server 4. This message identifies User 1 and the player's representation that they are looking at. As above, this message is then broadcast to each of the other software clients 12 so that the players can see which player is looking at what. This method of showing where a player is looking can also be applied to other player actions such as looking at hole cards.

User 1 may also select their avatars emotional representation and trigger emotes or chip tricks using the software client 12. These are described further below.

Also, game events such as the next cards, are generated and encoded at the gaming server 4 and simply broadcast to each software client 12. These codes are decoded at each software client as described above and used to generate the required graphical response within the virtual environment.

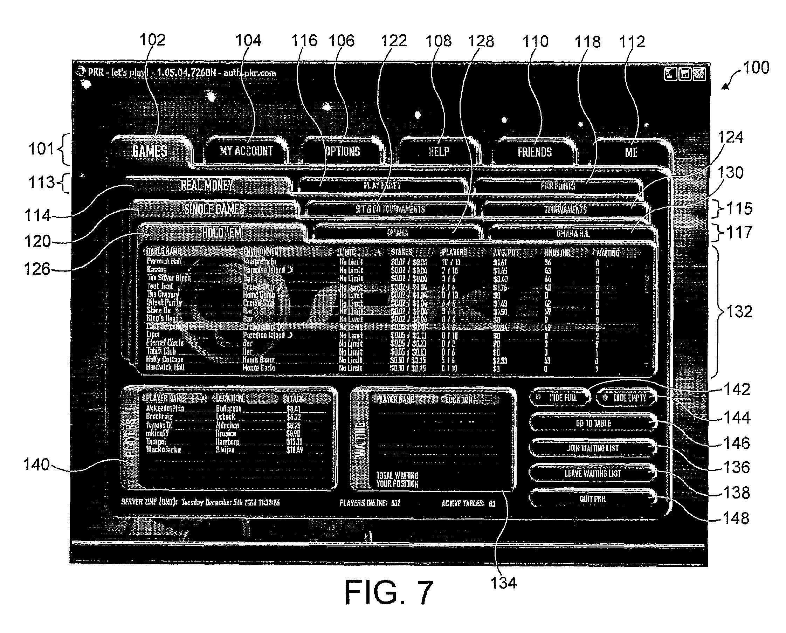

Once the player has successfully downloaded and installed the software client 12 on their personal computer 6, and registered on gaming database 50, the software client 12 presents the player with the initial GUI 100 according to a preferred embodiment of the present invention, as shown in Figure 7. The initial GUI 100 is referred to as the "lobby" 100 in this document.

The lobby 100 comprises a first row of six main tabs 101: a games tab 102 which is discussed further below; a my account tab 104 which allows a player to view their account details which are stored as registered user information 51 in the gaming database 50; an options tab 106 for setting sound and graphics used by the software client 12; a help tab 108 for obtaining help regarding the poker system; a friends tab 110 which allows a player to list friends which also use the poker system; and a me tab 112 which enables the player to personalise their avatar. In the view of the lobby 100 shown in Figure 7 the games tab 102 is selected.

The games tab 102 contains a first row of three currency sub-tabs 113: a real money sub-tab 114, selection of which allows the player to view poker games played using real money; a play money sub-tab 116, selection of which allows the player to view poker games played using play money, i.e. nominal fake money; and a PKR points tab 118, selection of which allows the player to view the number of PKR points available in a tournament or game. In the view of the lobby 100 shown in Figure 7 the real money sub-tab 114 is selected.

By selecting the real money sub-tab 114 or play money sub-tab 116, the player is presented with a choice of the type of poker game that they wish to enter. The player then selects from a further row of game type sub-tabs 115: a single games sub-tab 120; a sit and go tournaments sub-tab 122; and a tournaments sub-tab 124. Single games (or cash games/ring games) are always running on the gaming server 4 and can be bought into at a range of levels. In the view shown in Figure 7, the single games sub-tab 120 is selected.

Multi-table tournaments can be selected in the game lobby 100 by clicking on the tournaments sub-tab 124. "Sit & go" tournaments are similar to regular poker tournaments but, rather than starting at a scheduled time, they start as soon as the required number of players have signed up. Sit & go tournaments can be selected by clicking on the sit & go tournaments tab 122.

Once the player has selected which game type to play, they can then choose which poker variant to play: Texas hold 'em, Omaha or Omaha High/Low. The poker variant is selected from the row of poker variant sub-tabs 117. Namely a hold 'em sub-tab 126, a Omaha sub-tab and a Omaha H/L sub-tab. In the view shown in Figure 7, the hold 'em sub-tab 126 is selected.

A tabulation 132 shows the hold 'em games currently available on the gaming server 4. The table name, virtual environment of the table, table limit, stakes, number of players, average pot size, hands per hour and number of people waiting to join each hold 'em table are shown in the tabulation 132. The table highlighted in the tabulation 132 isnamed "Last Sorcerer 1" and the details of the players on that table are shown in a table of players 140 which lists the names of the players playing at the table, their location and the total amount of chips they have in their stack. If there is no seat available at a particular table that the player wishes to play on, they can add themselves to a waiting list 134 by highlighting the table in the tabulation 132 and then clicking on a join waiting list button 136. The player's name will then appear in the waiting list 134 for that table and the player will be informed as soon as a seat becomes available. The player can leave the waiting list 134 by clicking a leave waiting list button 138. In order to join a table the player simply selects the table they wish to join and click the go to table button 146. Alternatively, the player may or double click on the name of the table in the tabulation 132 that they wish to join.

The player can filter the tables shown in the tabulation 132 by hiding the tables which are full by clicking the hide full button 142 and/or hiding the empty tables by clicking the hide empty button 144. The player may exit the software client 12 at any time by clicking the quit PKR button 148.

The selections described above can be applied to play money by selecting the play money tab 116.

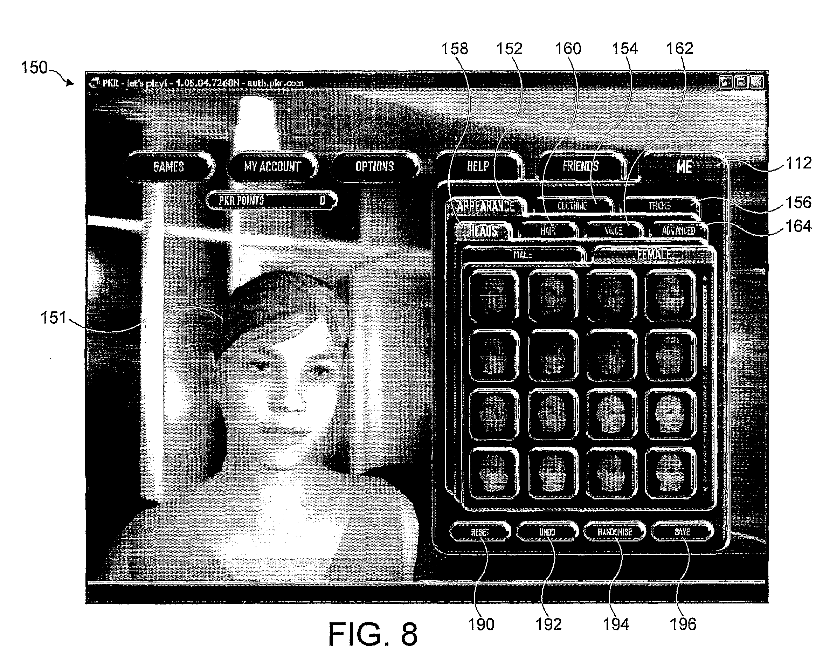

When the me tab 112 is clicked, an options GUI 150 shown in Figure 8 is displayed, which allows the player to personalise their avatar. Examples of characteristics that can be configured include the gender of the avatar to the shape of its face, the type of clothes it wears and accessories such as hats, sunglasses and jewellery. As described previously, each characteristic has an associated code in which is stored locally and also sent to the gaming server 4 and broadcast to other software clients 12 as necessary.

The options GUI 150 enables the player to create a fully realistic three-dimensional character, including choosing the sex, age, race and facial features, and outfitting the character with a wide variety of clothing and accessories, such that each player can create a unique representation which may or may not bear the likeness of the player. The representation (the player's avatar), can then be used throughout the on-line gaming experience, and all players see other players as they have chosen to be represented graphically.

In overview, the image generation module 24 of the software client 12 splits the physical representation of each character into separate parts, for example, head, skin, torso, hips and legs and shoes. The software client 12 contains many separate models for each of these parts which are combined together to create an individual avatar. In addition, the textures for each of these parts can be changed to increase variety. Finally, graphical representations of extra accessories such as hats, glasses, facial hair, jewellery, watches, etc. can be added.

On the left of the options GUI 150 a graphical representation of the player's avatar 151 is displayed. The software client 12 creates models of parts of the avatar's 151 anatomy, for example, head, torso, legs, feet. These models can be selected by clicking on either an appearance tab 152 or a clothing tab 154. The options GUI 150 then presents the player with a selection of different options for a particular part of the avatar's anatomy. For example, in Figure 8 the appearance tab 152 is selected which reveals a head tab 158 for selecting the avatar's 151 head from a selection of male or female heads; a hair tab 160 for selecting the avatar's 151 hair; a voice tab 162 for selecting the avatar's 151 voice; and an advanced tab 164 which contains further tools for refining the avatar's 151 face. As appearance options are selected made to the avatar they are previewed on the avatar 151.

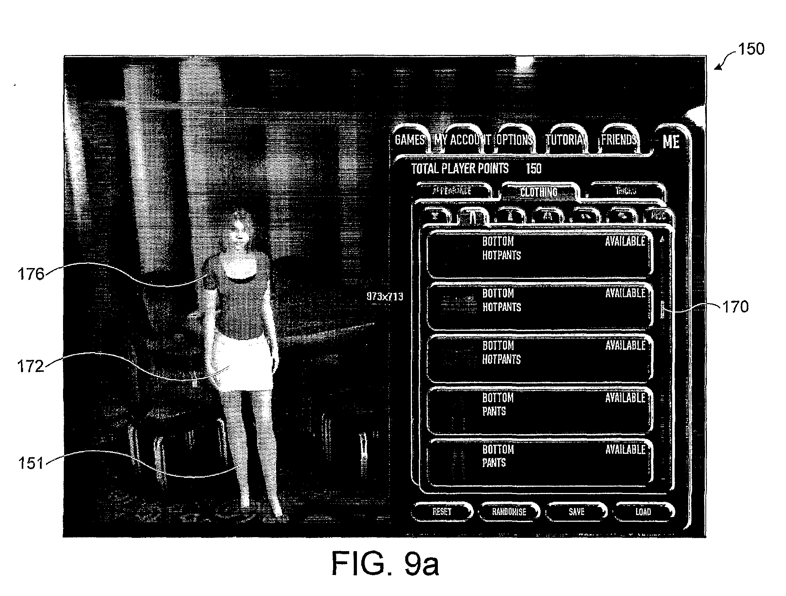

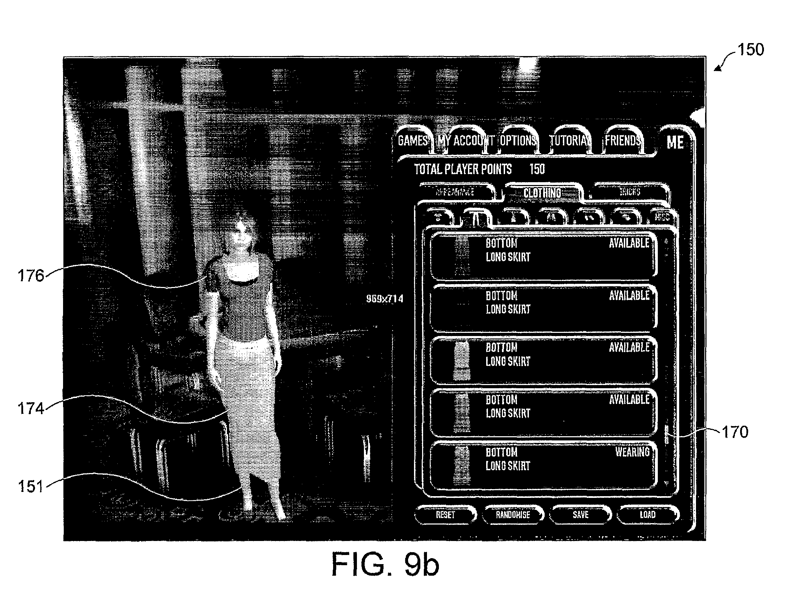

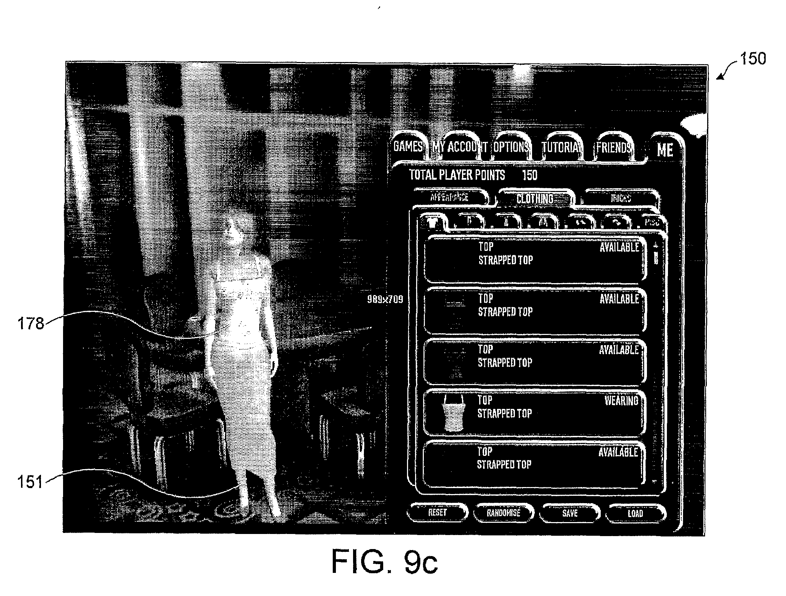

Further examples of the options available to the player are shown in Figures 9a to 9e which show screenshots of the options GUI 150 according to a further embodiment of the invention. In Figure 9a the clothing tab 160 has been selected and the avatar 151 is shown wearing a short skirt 172. However, as can be seen from Figure 9b the player has moved a scroll bar 170 to view various other skirts and changed the avatar's 151 skirt to a long skirt 174. Similarly in Figure 9c the player has changed the avatar's 151 T-top 176 to a strapped top 178.

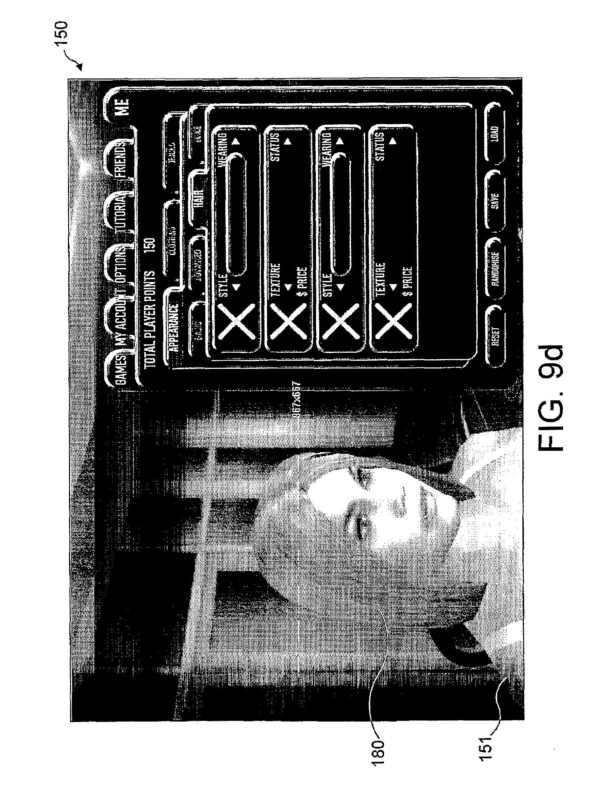

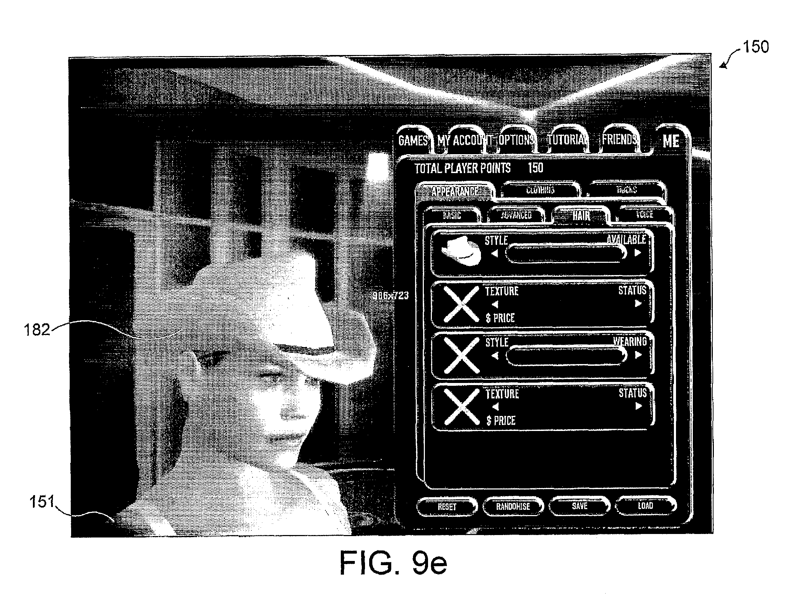

Figures 9d and 9e show screenshots of the options GUI 150 where the player is choosing the avatar's 151 hairstyle 180 and a hat 182 respectively. In each case, the software client 12 has already downloaded all the models available to the player, which have been created in advance.

Any changes made at this stage can easily by reset by clicking the reset button 190 or undone by clicking the undo button 192. Clicking the randomise button 194 creates a completely random avatar 151. Any changes made can be saved as physical representation data 30 in the client database 26 using the save button 196.

Initially, the player can only choose options from a limited list. However, when the player accumulates PKR points, they can "spend" some or all of those PKR points on exclusive or desirable options such as jewellery or distinctive clothing. Such options are valued differently, making some items expensive, and therefore more exclusive. The player accrues PKR Points every time that the player plays a hand of poker for real money. Since PKR points are obtained by playing on the system 2, such options also provide an indication of the player's experience. PKR points can be redeemed for a ticket which entitles the holder to enter a tournament, or an upgrades to the players on-screen representation, for example. The balance of the player's PKR points is stored in the gaming database 50.

The playing experience of the player can be represented graphically on the player's avatar for other players to see. The experience represented may be representative of the length of time that the player has been registered on the system 2. Alternatively, or in combination, the experience represented may be representative of the success a player has had at poker tournaments. For example, the avatar of a player who wins a big tournament (or achieve other milestones) is entitled to wear bracelets or other medals that represent this achievement.

In a further embodiment of the present invention the player can upload one or more photographs of their face which is applied to their avatar. This is achieved by using non-proprietary software which identifies key features of the player's face from one or more photographs. The software analyses images and plots out the position of facial features like the eyes, nose and mouth. Then it uses that information to generate a three dimensional 'face'.

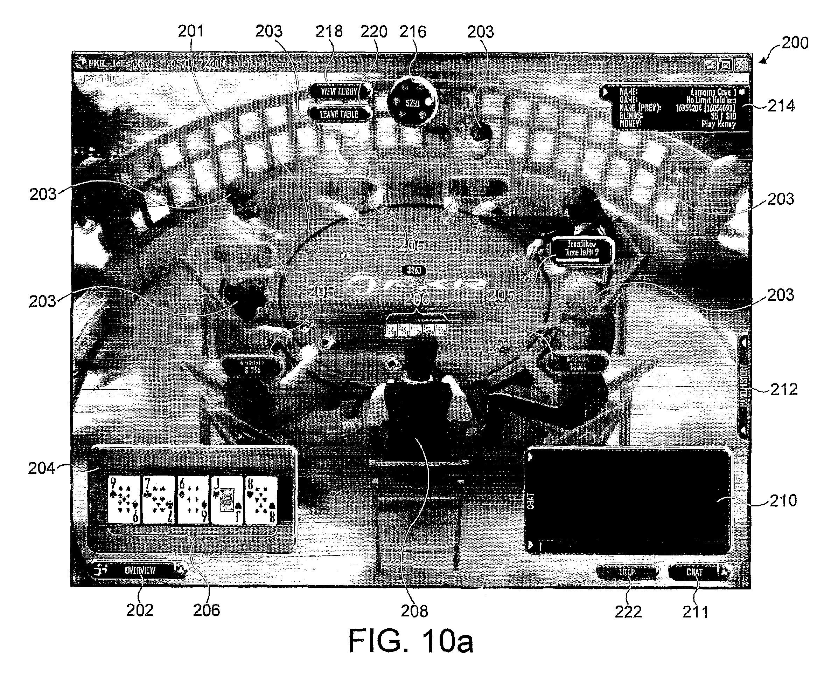

When the player selects and joins a table 201, as described above with reference to Figure 7, from the lobby 100, he or she is presented with a non-participating view 200 of that table 201, as shown in Figure 10a. The non-participating view displays a system of buttons and controls, referred to as a HUD, used to view or play poker using the gaming system. The elements of the HUD are described below.

A camera button 202 allows the player to choose the view of the table 201 from a number of views. This feature is described in more detail below. A board cam 204 displays the community cards 206 dealt in a hand of poker at the table 201. The community cards 206 are dealt in front of a dealer 208 which is controlled by the gaming system; however, the board cam 204 ensures that the community cards 206 can be seen clearly by the player.

A chat window 210 controlled by the chat interaction module 18 allows players to communicate with each other by typing messages to each other. The information displayed in the chat box 210 can be filtered depending on how much information the player wishes displayed by clicking on a chat button 211. For example, setting the chat box 210 to "summary" only displays player chat along with the winner and pot size of each hand. This non-player generated information is provided by the gaming server 4. In "normal" setting the above is shown plus the deal on the flop, turn and river. "Full" setting includes everything in "normal" setting along with individual player actions like 'call', 'fold' and 'raise'. This information is recorded to form the game history.

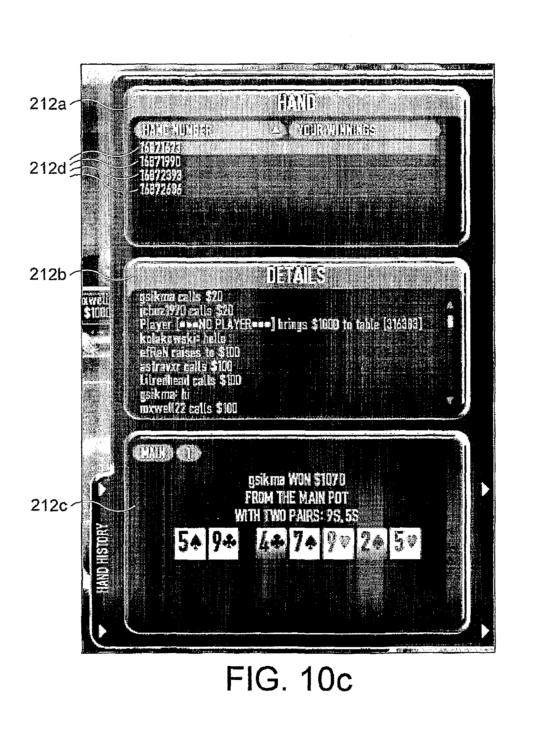

To see a summary of the hands played at the table 201 the player clicks on a hand history tab 212 which then expands to present information stored in the gaming database 50 regarding previously played hands, as shown in Figure 10c. A hand table 212a lists the hand numbers 212d which have been played at the table 201. The player can view the actions that were taken in each hand by clicking on one of the hand numbers 212d. The actions are presented as a list in the details list 212b. The main window 212c shown the winner of the pot(s) for the hand number 212d selected in the hand table 212a.

A table tab 214 provides information about the game viewed, including the name of table 201 and the table stakes. An action radar 216 indicates the size of the pot while dots which represent each player at the table, change colour to indicate action. A grey dot indicates that the table is waiting for the player to act, a green dot indicates a player has called, a yellow dot indicates a player has raised and a red dot indicates a player has gone all-in.

Clicking on a view lobby button 218 displays the lobby 100 with the game continuing to be shown in the background, while clicking on the leave table 220 button takes the player back to the lobby 100 as shown in Figure 7, i.e. without showing the game in the background. A help button 222 is provided, the activation of which provides the player with support regarding playing the game.

Player avatars 203 are also shown in the non-participating view 200. Each player is represented in the non-participating view 200, or virtual environment as discussed above, by their player avatar 203 which has been customized as described above. An information box 205 for each player avatar 203 displays information for each player, which includes their username and the size of their chip stack.

When one of the players leaves the table 201, their avatar 203 disappears and is replaced by an empty chair over which a "Sit Here" box (not shown) hovers. The player can click on the "Sit Here" box to join the table 201 and be dealt into the next hand. At which point their avatar 151 appears in the previously empty chair.

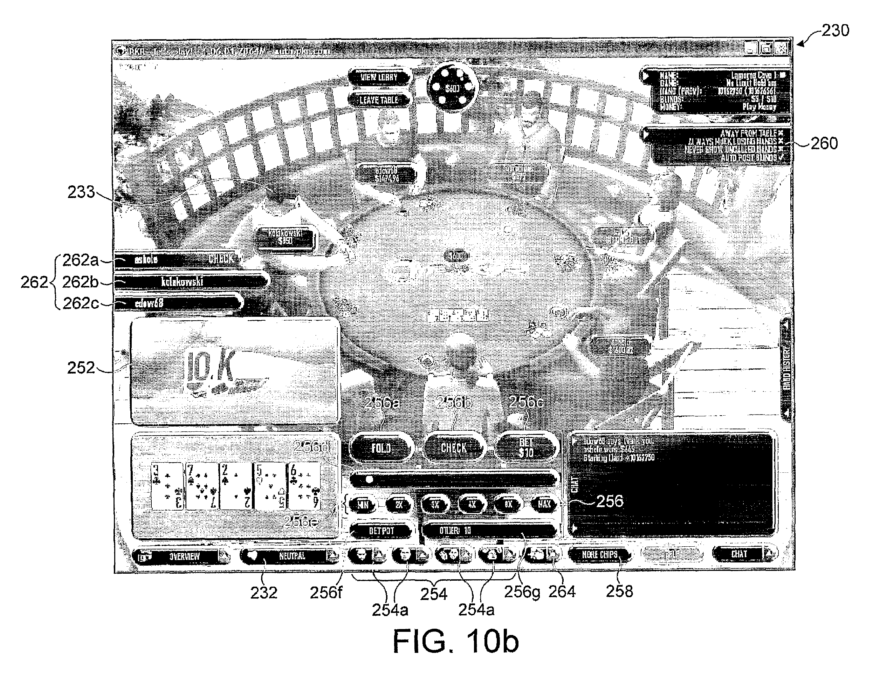

Figure 10b shows a screenshot of a participating view 230, or virtual environment as discussed above, of the table 201 displayed to the player in a game of on-line poker similar to that shown in Figure 10a. In this view the participant is represented by a player's avatar 233. Elements of the HUD which are common to both the non-participant view 200 and the participant view 230 perform the same functions in the participant view 230 and will be referred to using the numerals given above.

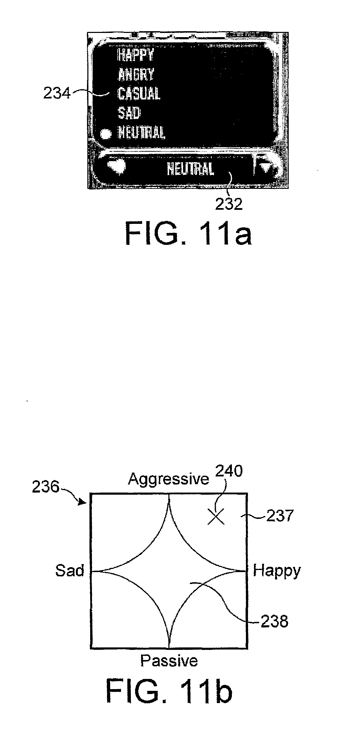

In addition to the non-participant view 200 HUD elements, the participant view 230 HUD includes a mood manager 232 which is used to control the disposition of the player's avatar 233 at the table 201. By clicking on the mood manager 232 the player is presented with a list 234 of emotional options, namely 'Happy', 'Casual', 'Sad', 'Angry' or 'Neutral', as shown in Figure 11a. When one of these options is selected, the player's avatar 233 changes its animated body language, tone of voice and what it says to correspond to the selected emotion. The associated software client 12 sends a coded message indicating the selected emotional state to the emotional representation module 27 on the gaming server 4 which then broadcasts that message to the software clients 12 of the other players. The representation of the player's avatar 233 provided by those software clients 12 is updated accordingly.

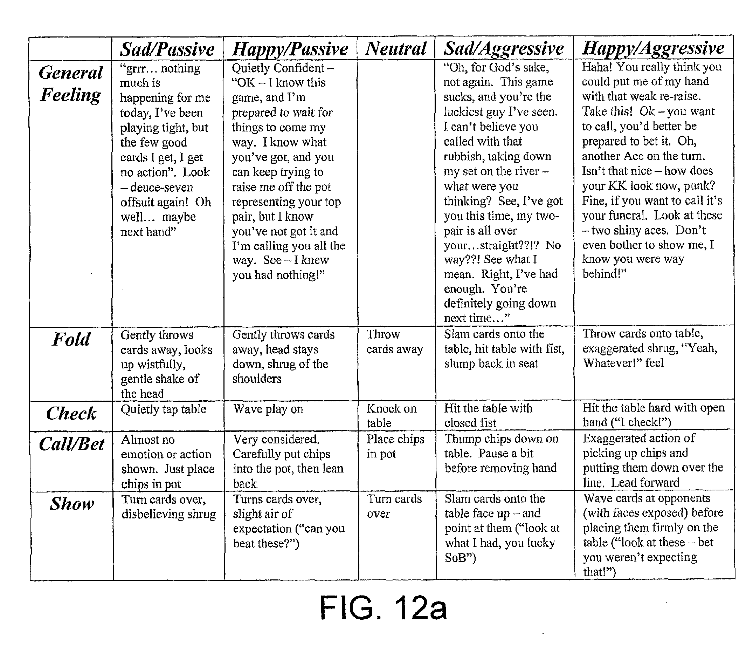

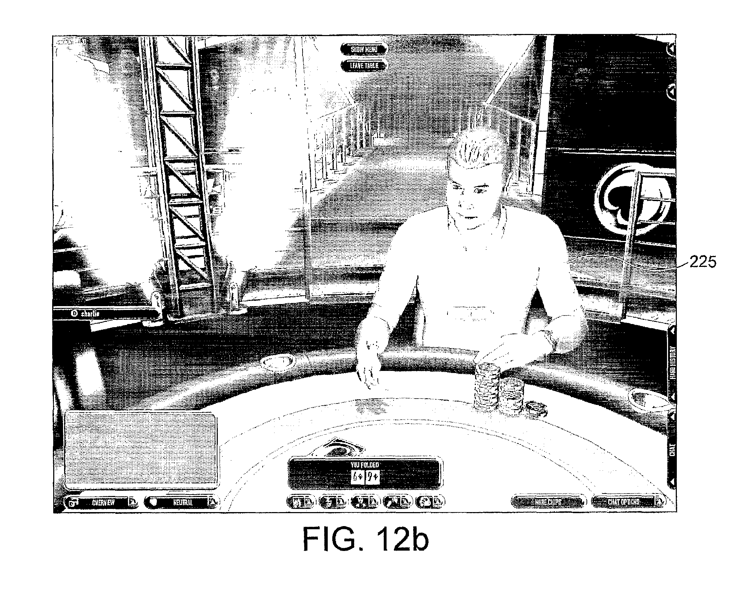

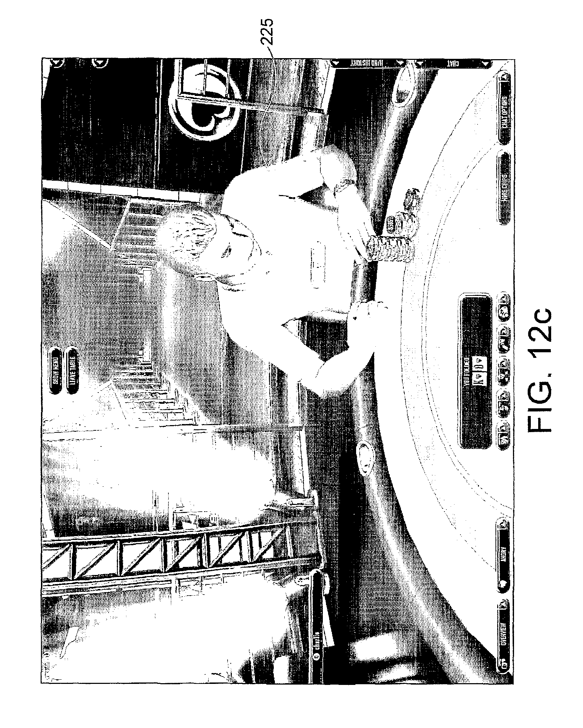

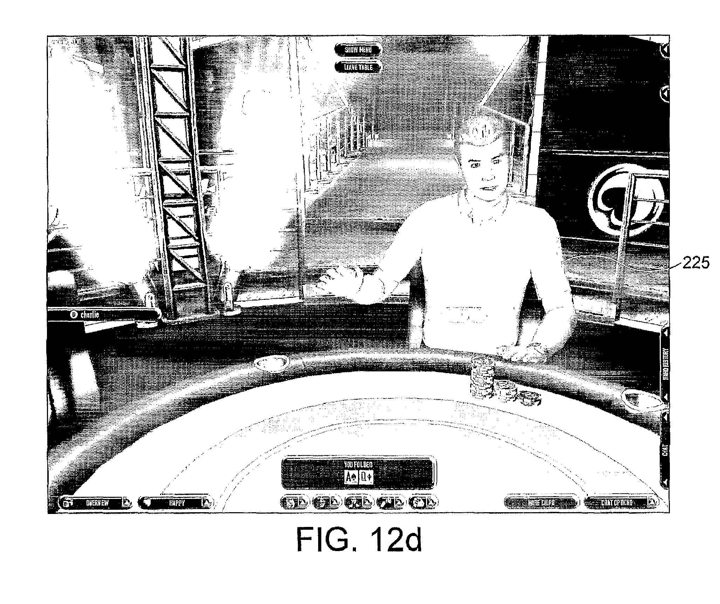

The selected emotional option serves to accentuate or subdue the reactions of the avatar to the occurrence of game events. Therefore, the player's mood is projected to the rest of the table. Examples of how the reactions of the avatar are depend on the emotional option chosen is given in the table shown in Figure 12a. Figures 12b to 12d illustrate how the reaction of an avatar 225 to an event is dependent on the setting of the mood manager 232. The event shown in each of the Figures 12b, 12c and 12d is that of the player folding their cards. In Figure 12b the mood manager 232 is set to 'Neutral', consequently the animated avatar 225 folds his cards nonchalantly. In Figure 12b the mood manager 232 is set to 'Angry', consequently the animated avatar 225 folds his cards and slams his fist on the table. In Figure 12c the mood manager 232 is set to 'Happy', consequently the animated avatar 225 jubilantly folds his cards.

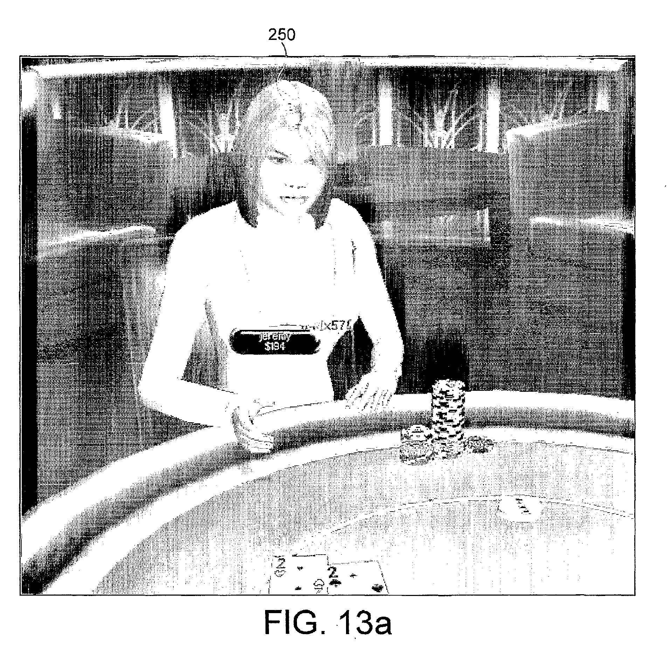

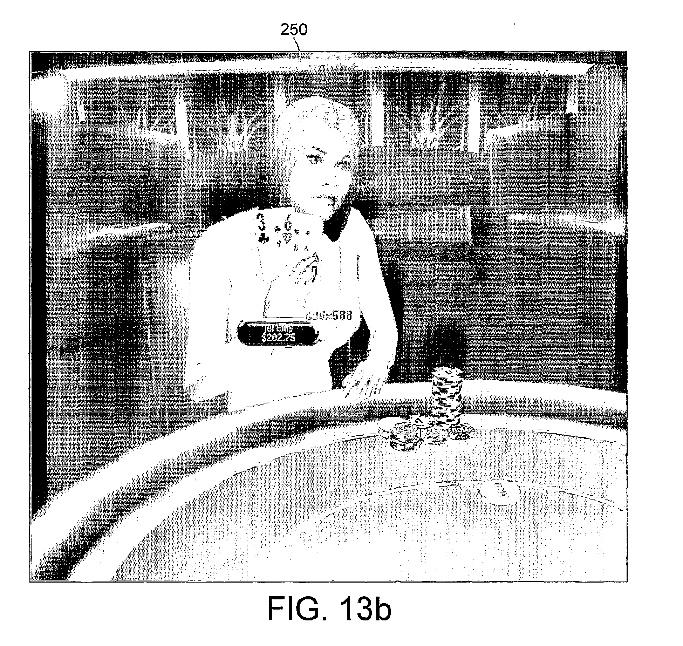

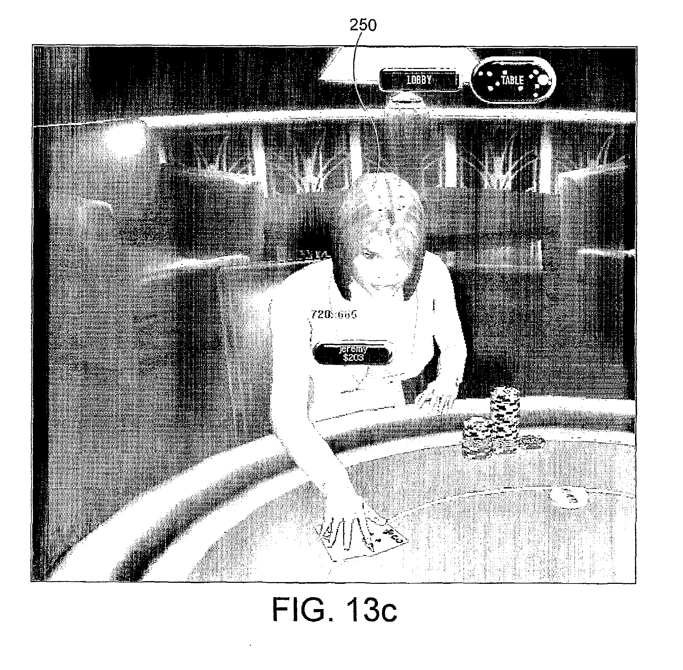

Further examples of how the reactions of an avatar 250 to a gameplay event are dependent on the setting of the mood manager 234 are shown in Figures 13a to 13c. Figure 13a shows a screenshot of the avatar 250 showing their cards at the end of a hand, where the 'Neutral' emotional state is selected. In this setting the avatar 250 simply turns the cards over. In Figure 13b, the mood manager is set to 'Happy'; therefore, for the same game event the avatar 250 waves the cards at an opponent (not shown). Finally, in Figure 13c, the mood manager 234 is set to 'Sad'; accordingly, the avatar 250 slams the cards on the table.

An alternative mood manager 236 may be used which is a two-dimensional square interface 237 on which a curser 240 is placed to set the emotion of the avatar, as shown in Figure 11b. The centre 238 of the interface 237 corresponds to the 'Neutral' emotional option and each side of the interface 237 corresponds to another emotional option, namely 'Aggressive', 'Happy', 'Sad' and 'Passive'. At any point during gameplay, the player' can click in the interface 237 and the curser 240 will indicate their chosen emotional option. The software client 12 will then send a coded message indicating the selected emotional state to the emotional representation module 27 on the gaming server 4 which then broadcasts that message to the software clients 12 of the other players, as described above. In the mood manager shown in Figure 11b, the player has two dimensions of emotional freedom ― sad/happy and passive/aggressive. It will be immediately apparent to the skilled person that further degrees of freedom may be added by simply creating further interfaces.

In a further embodiment of the invention the alternative mood manager 236 reacts to events that take place while the player plays in the game. For example, if the curser 240 is set as shown in Figure 11b and the player begins to continually lose hands, the curser will gradually move towards the 'sad' side of the interface 236. Conversely, if the player wins a series of hands the curser 240 will move towards the 'Happy' side of the interface 236. The curser also moves based on how the player is playing. For example, if the player is playing loosely the curser 340 moves towards the 'Aggressive' side of the interface, and if the player is playing tightly the curser moves towards the 'Passive' side.

The curser 240 can be moved to any point on the interface 236 at any time, but over time it will gradually move back to where it should be based on how the player plays. If the player wishes to keep the curser 240 in a specific place ― effectively setting the emotional option described earlier ― the player will have to keep moving the curser back to that place. This is analogous to maintaining a "poker face" in non-virtual poker.

Returning to Figure 10b, the HUD also includes a card look cam 252. In order for the player to view their cards they must click on a 'Look at cards' button (not shown) which opens the card look cam 252. As shown in Figure 10b, the player's avatar 233 looks at the cards, which can been seen by the rest of the players on their personal computers 6 due to a coded message generated and sent to the gaming server 4, which is broadcast to the rest of the players. The player's avatar 233 then places the cards face down on the table 201 and the card look cam 252 closes. If the player needs to look at their cards for a longer they can click and hold on the 'Look at cards' button.

'Emotes' are actions and gestures that the player instructs the player's avatar 233 to perform during gameplay. They are used to express a wide range of thoughts and feelings to other players. For example, the player can instruct the player's avatar to say 'Nice hand!' or, perhaps, dance for joy when the player has won a big hand, or flash a sly smile during play.

Emotes are pre-set using the four emote control buttons 254 by clicking on one of them and then choosing an emote from the pop-up list (not shown) that appears. Once an emote has been selected a graphic 254a will appear on the emote control button 254 which corresponds to the emote which it is set at. The player instructs the player's avatar 233 to perform an emote by simply clicking on one of the emote control buttons 254. Every time an emote is triggered, a coded message which indicates the triggered is sent from the software client 12 to the other player's software clients 12 via the gaming server 4. Then, in each player's software client 12, a message appears in the chat box 210 indicating the action and the action is performed by the player's avatar. For example, if the emote 'Nice hand!' is triggered, *Nice hand!* will appear in the chat box 210. Emotes can also be triggered by typing them into the chat box 210 with a '/' at the beginning of the text. For example, typing /*clap* will cause your character to perform the emote 'clap approvingly'. If the player types in a commonly used acronym, a corresponding emote will be triggered. For example, typing /*nh* into the chat box 210 triggers the player's avatar to say 'Nice hand!'. The chat box 210 triggered emotes are interpreted by the chat interpretation module 18 on each software client 12.

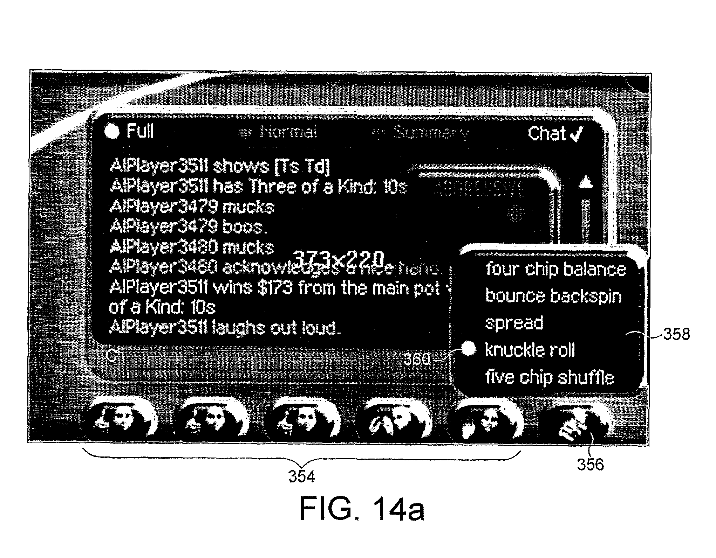

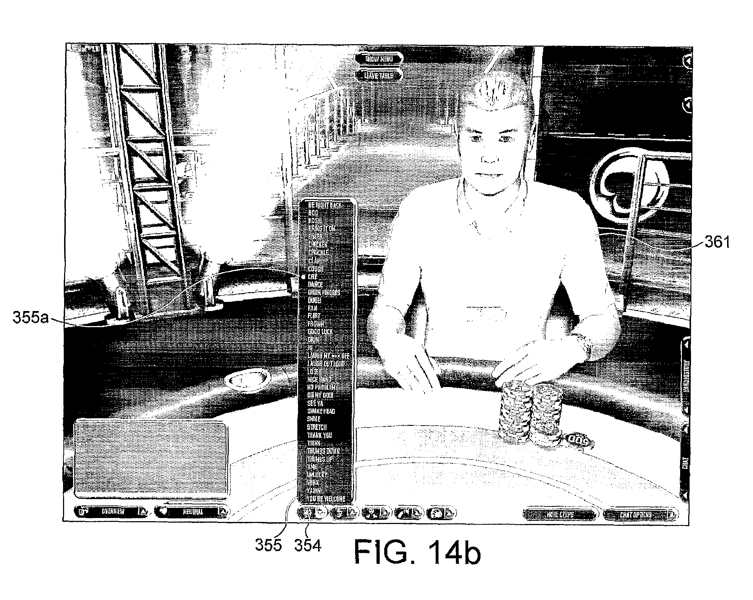

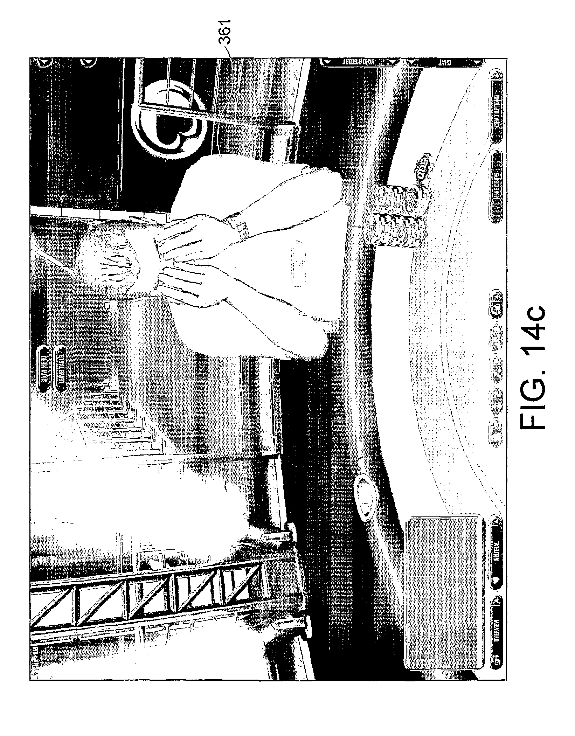

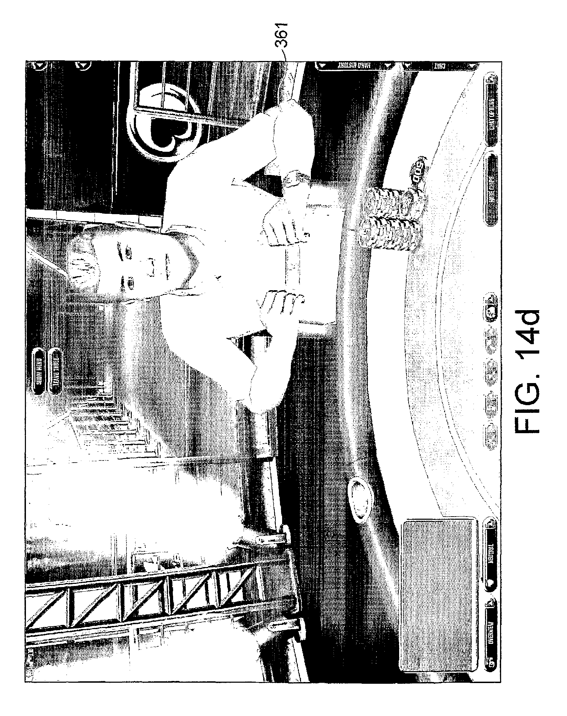

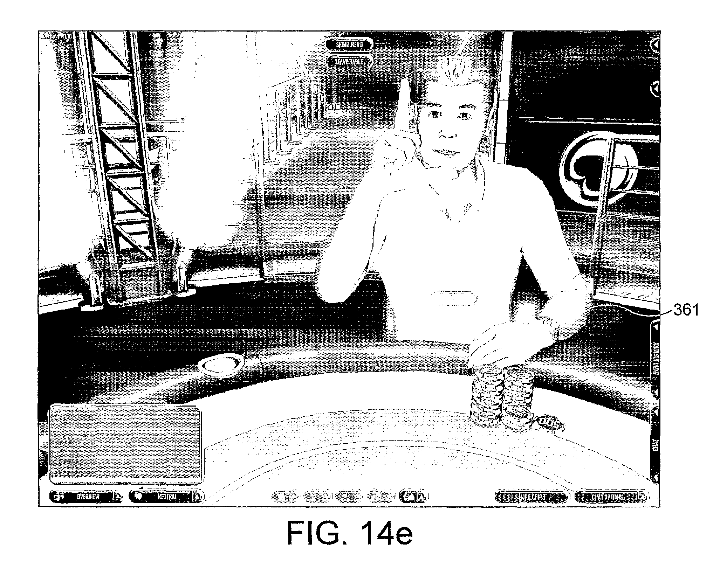

Figure 14a shows a set of emote control buttons 354 and a chip trick button 356 according to a further embodiment of the invention. To trigger an emote the player simply chooses the required emote from a pop-up list 355 shown in Figure 14b and as described above. To trigger the chosen emote the player clicks the corresponding emote control button 354. The emote chosen in Figure 14b is "cry" as indicated by a white dot 355a. When the corresponding emote control button 354 is pressed, the player's avatar 361 cries, as shown in Figure 14c. Further examples of the player's avatar 361 performing emotes are shown in Figure 14d which shows the player's avatar 361 performing a "chicken" emote; and Figure 14e which shows the player's avatar 361 performing a "loser" emote.

In addition, the player can target emotes at another players. For example, so that the player's avatar 233 can laugh or point at another player's avatar. This is achieved by the player by simply selecting clicking on an information box 205 and then clicking on one of the emote control buttons 254. A corresponding coded message is sent from the player's software client 12 to the other players' software clients 12 via the gaming server 4.

A bet control panel 256 allows the player to fold, check, call or raise a hand when it is the player's turn to act. The player uses a fold button 256a, a check button 256b and a bet button 256c to act quickly. Alternatively, a slider 256d and multiple buttons 256e can be used to make a larger or more specific bet. When the slider 256d is moved the player's avatar 233 counts out a corresponding number of chips from its stack. The bet pot 256f button allows the player to make a bet that is the size of the pot and the other bet box 256g allows the player to specify an amount to bet.

In cash games and re-buy tournaments the player can top-up their chip stack by clicking on the more chips button 258. Certain gameplay features can be automated, for example, always mucking losing hands, never showing uncalled hands and auto-posting blinds, by clicking on the corresponding text in a card control panel 260. The card control panel 260 also allows the player to auto-post blinds.

The HUD also has player tabs 262 which provide a quick and easy way to view whose turn it is and what the action is. The player tabs 262 appear in descending order, i.e. from first to act to last to act. The player tabs 262 comprise a number of fingers 262a, 262b, 262c which correspond to the number of players in a hand. For example, there are three player in the hand shown in Figure 10b. The action finger 262b corresponds to the player whose turn it is. The fingers 262a, 262b, 262c are colour coded as described above for the action radar 216.

Clicking on a chip trick button 264 triggers the player's avatar 233 to perform a chip trick. The chip trick button 264 works the same way as the emote control buttons 254, namely a chip trick is selected from a pop-up list (not shown), which is then triggered every time the chip trick button 264 is clicked. Also a coded message for each chip trick is sent from the player's software client 12 to the other player's software clients 12 via the gaming server 4. More advanced and exclusive chip tricks can be exchanged for PKR Points.

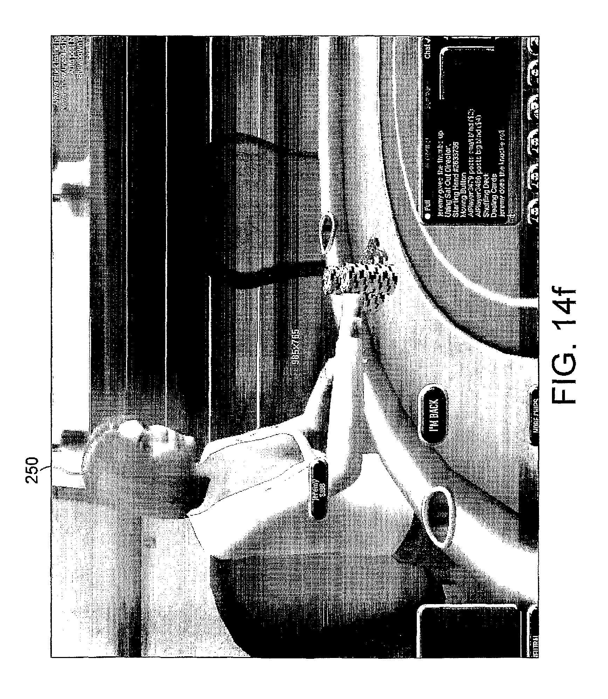

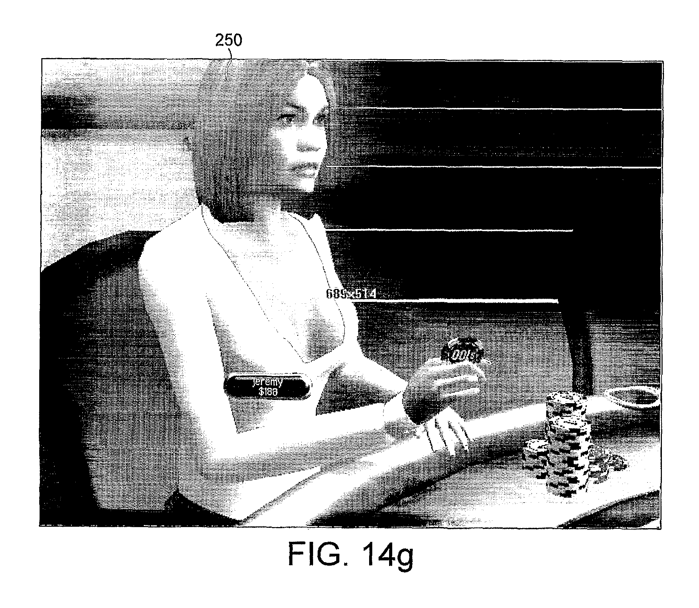

Referring again to Figure 14a, which shows a screenshot of part of an alternative embodiment of a HUD, a chip trick button 356 is clicked and a pop-up list 358 of chip tricks appears. The player selects 'knuckle roll' 360 and then clicks again on the chip trick button 356. As can be seen from Figures 14f and 14g the player's avatar 250 picks up a chip and performs a knuckle roll trick.

Referring back to Figures 10a and 10b, the camera button 202 provides a means for changing the participating view 200 or non-participating view 230, or view of the virtual environment. The view may be changed by the player or dynamically by the system according to events taking place in the game. The image generation module 24 is responsible for tailoring the view of the virtual environment to the player and contains software for setting the camera views described below. The camera view on each software client is independent; therefore, each software client can view a game from its own camera.

Similarly to the chip trick button 264 and the emote control buttons 254, the player clicks the camera button 202 to view a list (not shown) of views from which the table 201 can be observed. This list includes "north", "south", "east" and "west", "overview", "first person", "orbit"; and "dynamic". Since the view provided by a software client 12 is independent of the other software clients 12, a coded message is not sent from the software client 12.

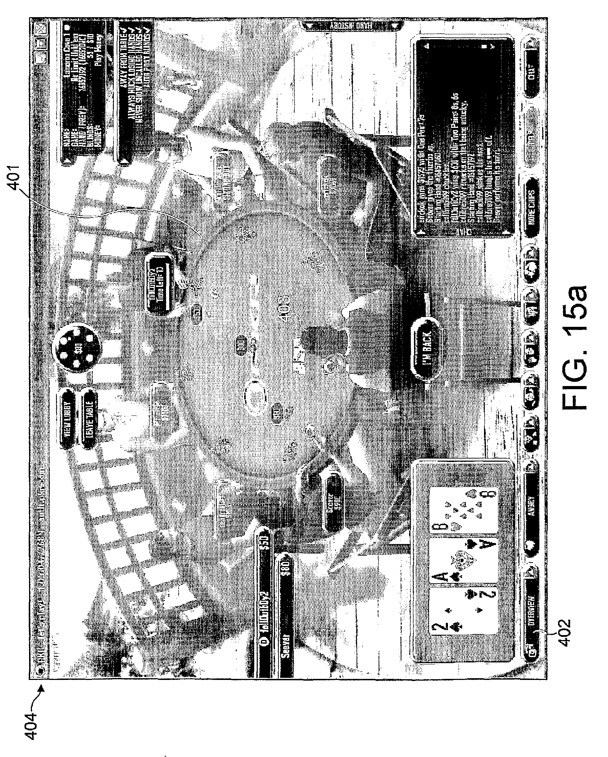

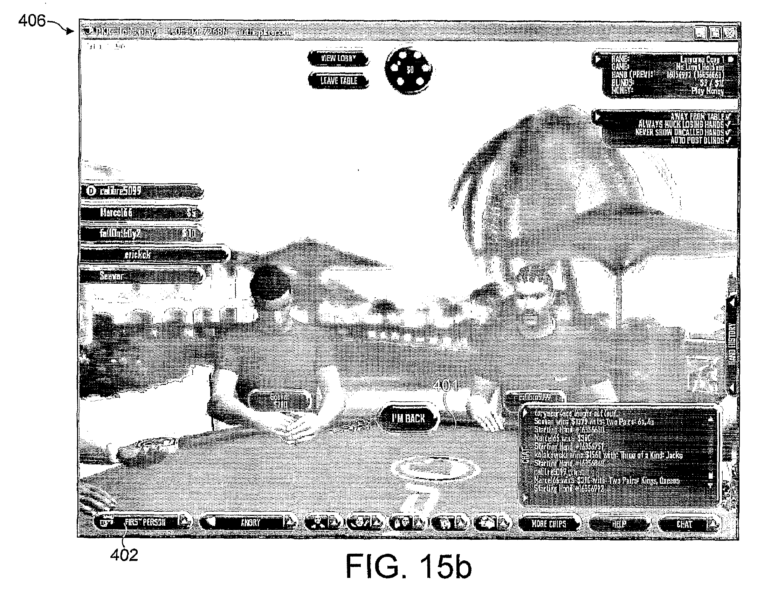

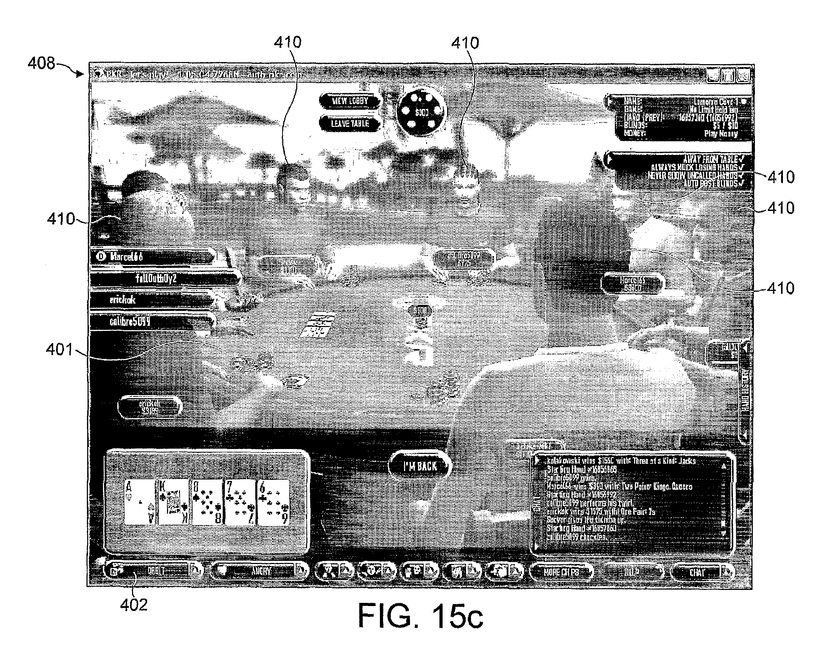

The "north", "south", "east" and "west" views are simply views of the table from those points of the compass. Figures 15a to 15c show screenshots of the remaining static views, i.e. "overview", "first person" and "orbit", of a table 401. Figure 15a shows the default view which is an overview view 404 as shown by the camera button 402. This view delivers a static image of the table 401 from behind and above the dealer 403. The player can use the mouse wheel of their personal computer 12 to zoom in and out when the overview view 404 is selected. Figure 15b shows a first person view 406, as shown by the camera button 402, which is the view from the player's avatar's point of view; an Figure 15c shows an orbit view 408, as shown by camera button 402. This view is set just behind the avatars 410 and the player can rotate a full 360-degrees around the table 401 by left clicking and holding their and moving their mouse to manipulate the orbit view 408.

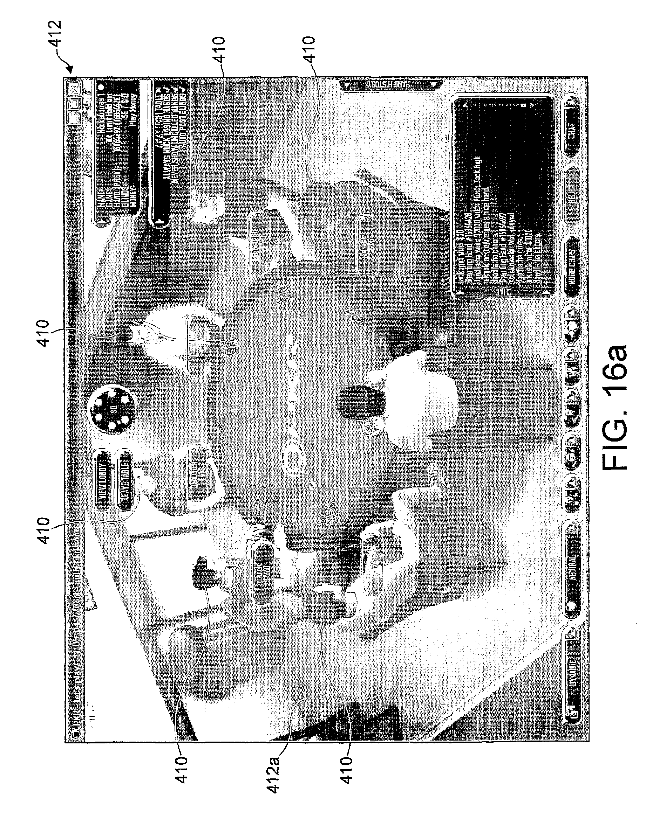

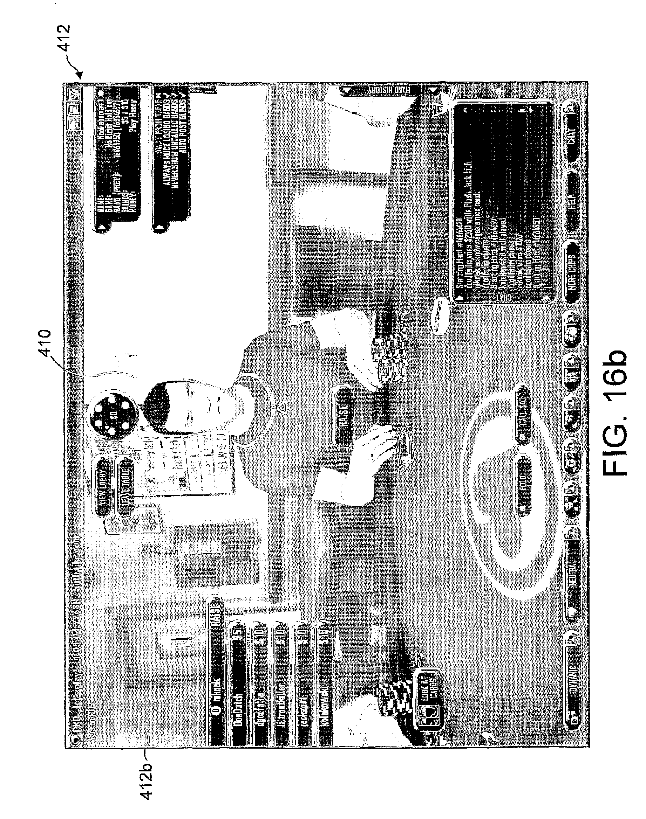

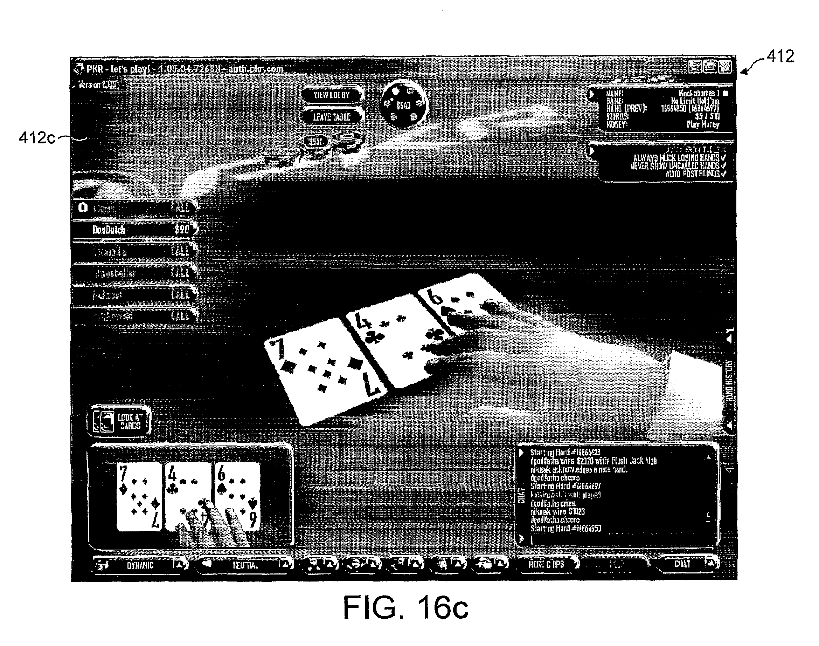

A dynamic view 412 is illustrated in the screenshots shown in Figures 16a to 16c. A first dynamic view 412a shown in Figure 16a is similar to the overview view 404 discussed above and shows all the avatars as play is yet to commence. Once the hole cards have been dealt the first round of betting commences. At this point the view changes to a second dynamic view 412b in which the view is a close-up view of the avatar 410 of the player whose turn it is. When the first round of betting has finished the flop is dealt. As illustrated in Figure 16c, the view zooms-in to a third dynamic view 412c which is a close-up view of the flop cards. Once all the players have had a chance to clearly see the flop, the view returns to the first dynamic view 412 until an event occurs.

The dynamic view 412 changes the view presented to the player so that is appears to the player that they were watching the progress of the game on TV, guided by a competent and knowledgeable director. This is achieved by the use of a large number of carefully positioned virtual cameras that can track, pan and zoom appropriately, and which are combined together to show the player a dynamic view of the game, focusing on what is happening at the moment, and showing all the key moments in a hand from a series of unique and compelling angles.

The poker system is configured to allow the player to play more than one game of poker hosted on the gaming server 4 simultaneously. To play on further tables the player clicks on the view lobby button 218, While the current game continues in the background the player selects a further table to join from the lobby 100, as described above. Again, if the player wishes to join a further game they can again click on the view lobby button 218 and select a further table to join from the lobby 100.

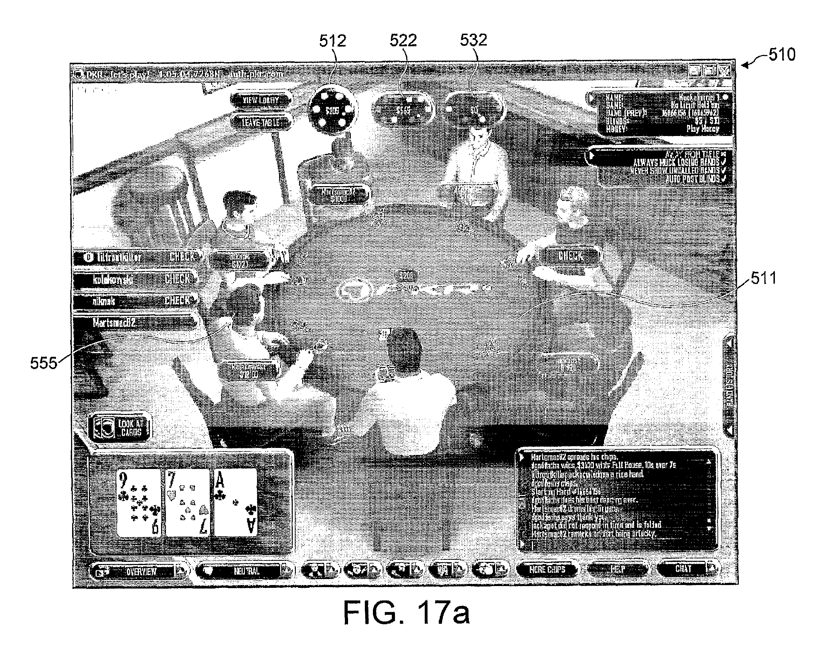

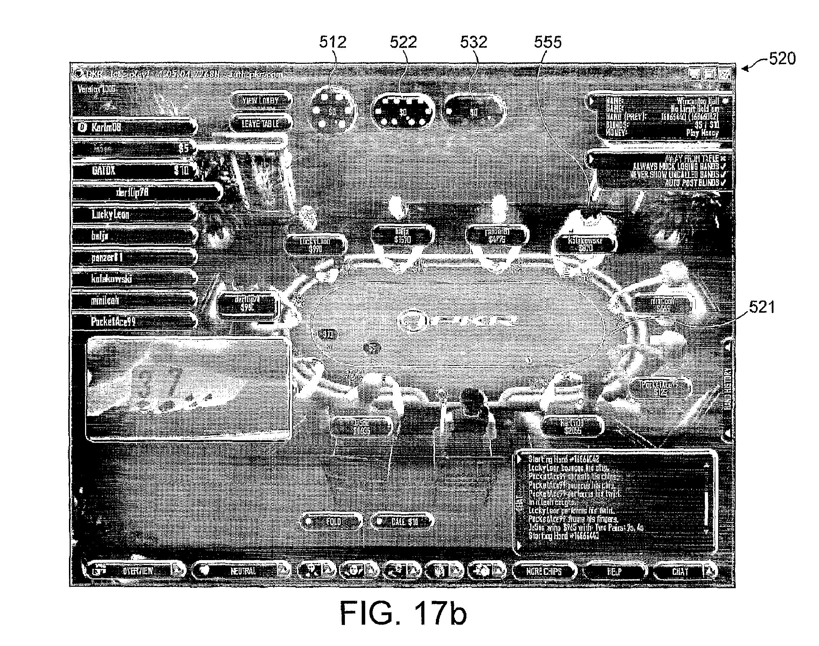

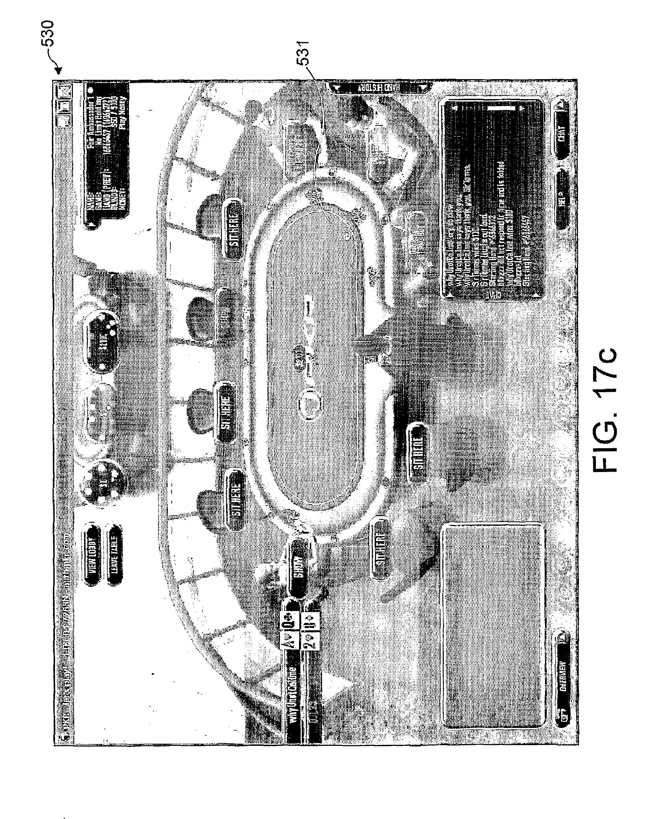

Figures 17a to 17c illustrate how the player plays three different tables simultaneously. In a first view 510 shown in Figure 17a the player is shown a first table 511; in a second view 520 shown in Figure 17b the player is shown a second table 521; and in a third view 530 shown in Figure 17b the player is shown a second table 531. The player's avatar 555 is sat at the first table 511 and the second table 521, but the player is only viewing the third table 531 without participating in the game. The player can switch between the tables 511, 521, 523 by clicking on a first action radar 512 to view the first table 511; a second action radar 522 to view the second table 512; and a third action radar 532 to view the third table 513. All the action radars 512, 522, 532 are shown in each view 510, 520, 530. However, the action radars 512, 522, 532 of the tables not currently viewed are grayed out. Taking Figure 17a for example, which shows the first table 511, the first action radar 512 while the second action radar 522 and the thirst action radar 532 are grayed out.

In an alternative embodiment (not shown), the system enables the player to play on more than one table by showing the second and any further tables in small windows within a HUD, similar to a picture-in-picture function on television sets. The player can interact with the games shown in the small windows and, therefore, is able to play them without the need to switch views.

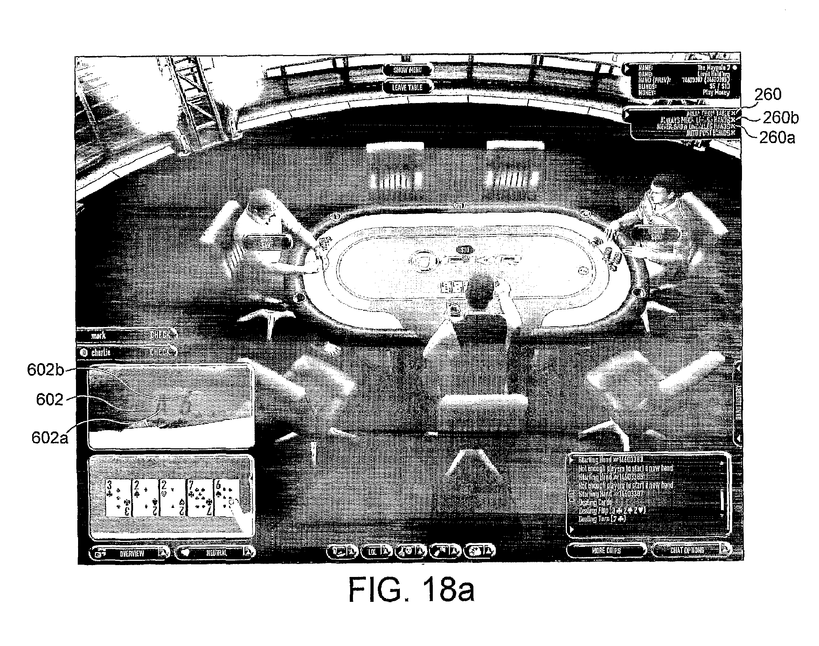

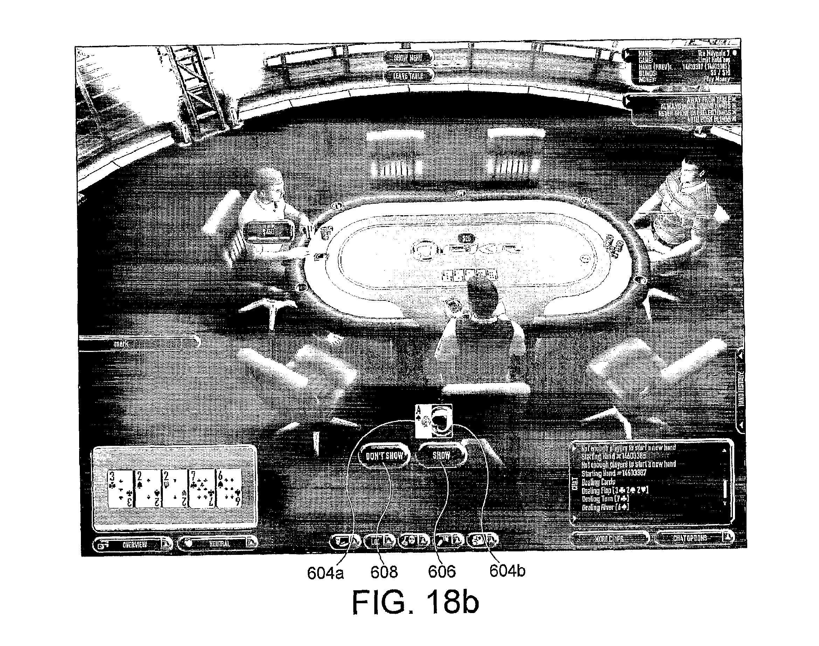

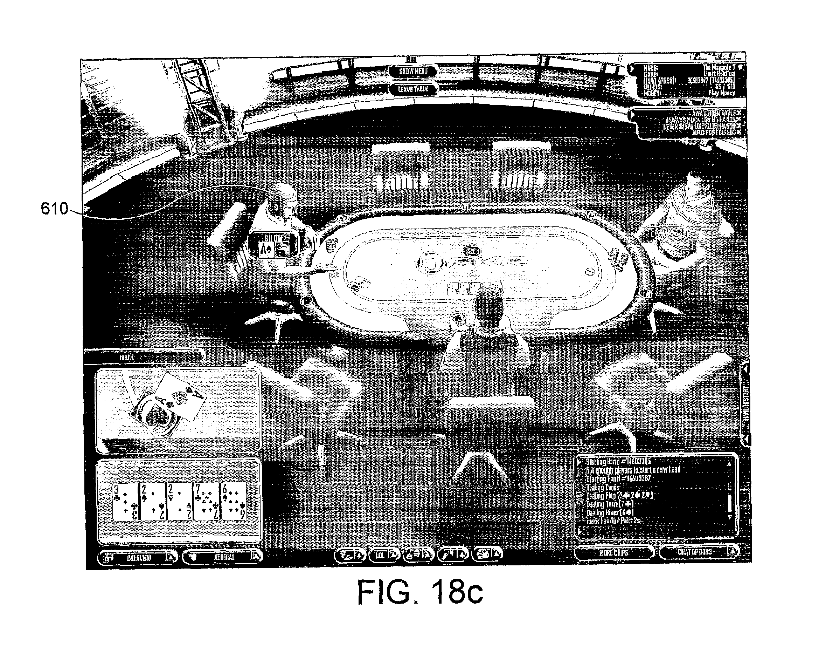

The system allows the player, at the end of a hand, to show their opponents one or both of the player's hole cards 602 when the player either loses a pot or wins a pot uncontested. As can be seen in Figure 18a, the hole cards comprise an ace of spades 602a and a six of clubs 602b. In order to show one or both of the hole cards 602 at the end of a hand, the player ensures that the 'never show uncalled hands' option 260a and the 'always muck losing hands' option 260b in the card control panel 260 are unchecked. This is indicated by a 'X' next to these options. Therefore, if the player loses a pot or wins a pot uncontested the player is presented with a first icon 604a representing the ace of spades 602a and a second icon 604b which represents the six of clubs 602b; a show button 606; and a don't show button 608. To show the ace of spades 602a only, shown in Figure 18b, the player clicks on the second icon 604b, which turns the second icon 604b, and then clicks the show button 606. This triggers the player's avatar 610 to show only the ace of spades 602a, as shown in Figure 18c.

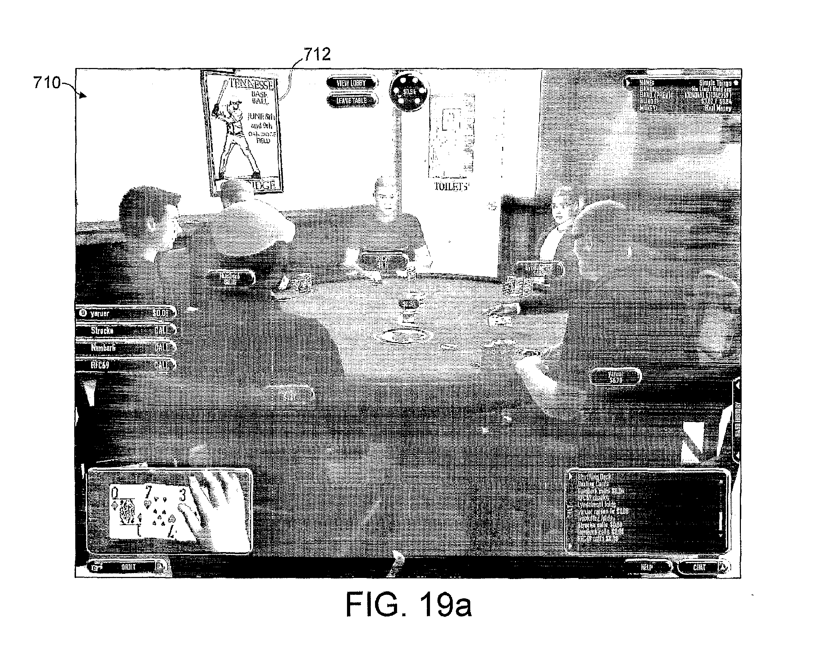

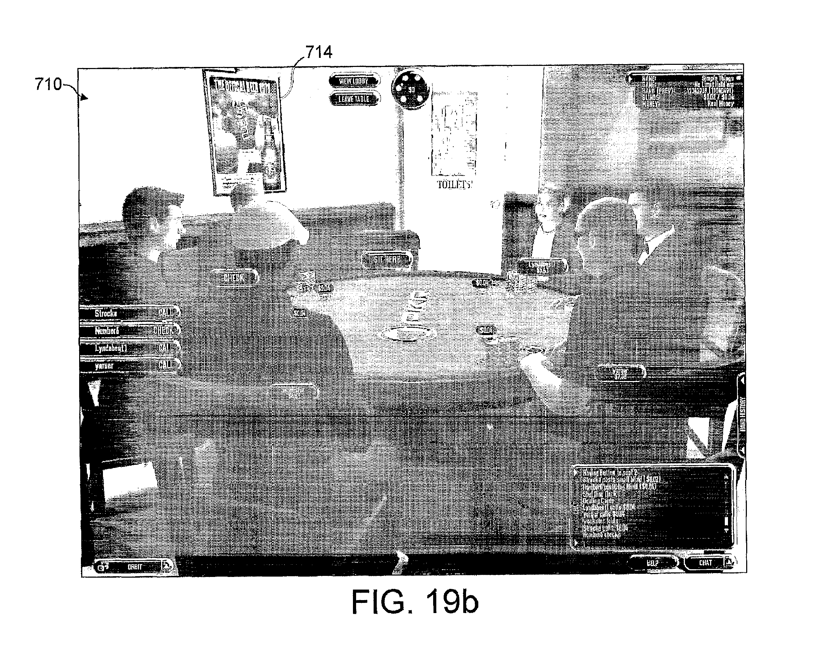

As discussed above, the gaming database 50 contains advertising data 53 which is displayed in the virtual environment. Figure 19a shows a view of a virtual environment 710 in which a game of poker is played. Hanging on a wall of the virtual environment 710 is a first advertising poster 712. The virtual environment 710 is generated by the image generation module 24 using physical representation data 30, which includes data relating to the first advertising poster 712, stored in the client database 26. The data relating to the first advertising poster 712 can be replaced with data relating to a second advertising poster 714 sent to the software client 12 from the gaming server 4. Thus the virtual environment 710 now contains the second advertising poster, as shown in Figure 19b.

Each player's software client 12 can each show a different advertisment in the virtual environment 714. Furthermore, the advertising data can be targeted to each player depending on the characteristics of that player as stored in the server database 50, for example, the player's location, age, sex, the time they spend on-line and the amount of money they deposit. This process simply involves the server 4 matching a player profile to an advertising profile.

A list of potential advertisers that wish to advertise on the system is maintained. For each advertiser a target demographic of their desired audience and two-dimensional graphics (the virtual equivalent of posters, standees, beer bottles, etc.) that will form the in-game representation of the advertising for that target demographic are stored as advertising data 53 in the gaming database 50.

When a player logs into the system that player's profile is compared with the list of demographics stored for the advertisers. If the player's profile matches any of the advertiser's demographics, one or more advert is chosen to be downloaded to the player's software client 12 and shown to the player during the course of their gameplay session.

The aspects of the present invention described herein are described with reference to a system for playing on-line poker. However, it will be immediately apparent to the skilled person that the present invention can be applied to any form of interactive gaming. It will be also be clearly apparent to the skilled person that variations may be made to the embodiments described above without departing from the essence of the invention. For example, whilst the present embodiments have been described in the context of software clients operating on personal computers, they could readily be implemented on a mobile computing platform such as a mobile phone, a PDA or laptop computer.

In general, the present invention may be embodied in other specific forms without departing from its essential attributes. Accordingly, reference should be made to the appended claims and other general statements herein rather than to the foregoing specific description as indicating the spirit and scope of the invention.

## Claims

1. A player terminal for use with a gaming server over a distributed communications network for facilitating the playing of a distributed multi-player on-line game involving interactions between different players in a virtual playing environment, the player terminal comprising:
receiving means for receiving from the server, information specifying a virtual playing environment and on-line players in that environment, and update information relating to game-playing events occurring within that environment during the playing of an on-line game; and
generating means for generating a graphical representation of the virtual playing environment from the received information and graphical representations of each on-line game player; wherein the generating means is arranged to enable the player to change the appearance of the graphical representation to reflect the experience of the player in playing the game.

2. A player terminal according to Claim 1, wherein the generating means is arranged to enable the graphical representation of a player to be changed by the addition of wearable items reflecting different levels of experience.

3. A player terminal according to Claim 2, wherein the generating means is arranged to enable the player to change the appearance of the graphical representation, by providing access to different wearable items with increased accrual of playing points by the player.

4. A player terminal according to any of Claims 1 to 3, wherein the generating means is arranged to change an animation of the graphical representation of the player to reflect the player's experience.

5. A player terminal according to Claim 4, further comprising a store of different animations each reflecting a different level of experience of the player in playing the game and means for selecting the appropriate animation for the player.

6. A player terminal according to Claim 5, wherein the generating means is arranged to provide access to different ones of the stored animations with increased accrual of playing points by the player.

7. A player terminal according to any of Claims 4 to 6, wherein the different animations are different chip tricks.

8. A player terminal according to any of Claims 1 to 7, wherein the on-line game is poker.
